# EUROPEAN PATENT SPECIFICATION

(11) **EP 2 184 505 B1**
(45) Date of publication and mention of the grant of the patent: **07.08.2013**
(21) Application number: 09175721.1
(22) Date of filing: 11.11.2009
(51) Int. Cl.: F16D 48/02

(54) **Vehicular clutch device**
Fahrzeugkupplungsvorrichtung
Dispositif d'embrayage de véhicule

(30) Priority: 11.11.2008 JP 2008289272; 28.07.2009 JP 2009175927
(43) Date of publication of application: 12.05.2010
(73) Proprietor: TOYOTA JIDOSHA KABUSHIKI KAISHA, Toyota-shi, Aichi-ken, 471-8571 (JP)
(72) Inventor: Ota, Masayoshi, Aichi-ken 471-8571 (JP); Okano, Nobuhiko, Aichi-ken 471-5871 (JP); Segawa, Takeo, Aichi-ken 471-8571 (JP); Kasamai, Satoshi, Aichi-ken 471-8571 (JP)
(74) Representative: Albutt, Anthony John

(56) References cited:
- DE-A1-102006 047 299
- FR-A5- 2 055 265
- GB-A- 2 115 896
- US-A- 4 852 352
- US-B1- 6 438 955

## Description

### BACKGROUND OF THE INVENTION

### 1. Field of the Invention

The invention relates to a vehicular clutch device provided in a power transmission path of a vehicle for allowing power to be transmitted via the power transmission path or inhibiting power from being transmitted via the power transmission path. In particular, the invention is concerned with a technique for improving the operability of the vehicular clutch device.

### 2. Description of the Related Art

A vehicular clutch device has been proposed which includes a clutch master cylinder that is connected to a reservoir tank in which hydraulic fluid is stored, and delivers a hydraulic pressure in response to an operation of a clutch pedal, and a clutch cylinder that disengages a friction clutch when receiving the hydraulic pressure delivered from the clutch master cylinder. An example of this type of vehicular clutch device is described in Japanese Patent Application Publication No. 2008-169927 (JP-A-2008-169927).

In the vehicular clutch device as described above, when the clutch pedal is depressed so as to switch the friction clutch from an engaged state to a disengaged or release state, the amount of pedal travel over which the oil pressure in a pressure chamber of the clutch master cylinder is not raised, namely, the amount of ineffective pedal travel that does not contribute to generation of the hydraulic pressure in the pressure chamber, is not sufficiently small, and the operability of the clutch pedal may deteriorate. More specifically, the clutch master cylinder includes a communication hole that communicates with the pressure chamber of the clutch master cylinder and the reservoir tank when the friction clutch is in the engaged state. When the clutch pedal is depressed, the oil in the pressure chamber does not start rising over the ineffective pedal travel, until the communication hole is closed by a piston that is advanced in the pressure chamber in response to the depression of the clutch pedal, and the operability of the clutch pedal may deteriorate due to the presence of the ineffective pedal travel. Also, the clutch cylinder may include a pair of pistons that are arranged in the axial direction such that a minute clearance can be formed between the pistons so as to prevent transmission of vibrations of the engine, or the like, to the clutch pedal. In this case, if the clutch pedal is returned to the original position after it is depressed, in particular, if the clutch pedal is abruptly released, a negative pressure is generated in a pressure chamber of the clutch cylinder, and the spacing between the above-indicated pair of pistons expands to be larger than a minute clearance necessary and sufficient to prevent transmission of vibrations as described above. Therefore, when the clutch pedal is subsequently depressed, the oil pressure in the pressure chamber of the clutch master cylinder does not start rising over an ineffective pedal travel until the spacing between the pistons is eliminated, and the operability of the clutch pedal may deteriorate due to the presence of the ineffective pedal travel.
UK Patent Application GB 2115896 discloses a recuperation valve for a hydraulic master cylinder for controlling clutches, brakes and similar mechanisms and comprises a non-return valve provided between a tank and a variable-volume chamber.

### SUMMARY OF THE INVENTION

The invention provides a vehicular clutch device that exhibits improved operability.

The inventors of the present invention found that the amount of ineffective pedal travel during depression of the clutch pedal can be reduced by restricting flow of hydraulic oil from the pressure chamber of the clutch master cylinder to the reservoir tank when the flow takes place in connection with an operation of the clutch pedal, and thus reducing the amount of flow of the hydraulic oil. The present invention has been developed based on this finding.

A vehicular clutch device according to one aspect of the invention includes a reservoir tank (64) in which a hydraulic oil is stored, a clutch master cylinder (62) that is connected to the reservoir tank (64), and has a pressure chamber (86) from which a hydraulic pressure is delivered in response to an operation of a clutch pedal (60), a clutch cylinder (66) that receives the hydraulic pressure delivered from the clutch master cylinder (62) and disengages a friction clutch (12), and a flow control device that restricts flow of the hydraulic oil from the pressure chamber (86) of the clutch master cylinder (62) to the reservoir tank (64) when the flow takes place in accordance with the operation of the clutch pedal (60).

In the vehicular clutch device according to the the invention, the flow control device () includes a restriction hole ( 222) that gives flow resistance to the hydraulic oil that flows in an oil path that communicates with the pressure chamber (86) of the clutch master cylinder (62) and the reservoir tank (64).

In the vehicular clutch device according to the above aspect of the invention, the flow control device may be configured such that resistance to flow of the hydraulic oil from the pressure chamber (86) of the clutch master cylinder (62) to the reservoir tank (64) is larger than resistance to flow of the hydraulic oil from the reservoir tank (64) to the pressure chamber (86) of the clutch master cylinder (62).

In the vehicular clutch device as described above, the clutch master cylinder (62) includes an attachment tube (100) having an opening formed at a distal end thereof and connecting the clutch master cylinder (62) with the reservoir tank (64), and the flow control device (220) may be fitted and mounted in the opening of the attachment tube (100), while the restriction hole (222) provided in the flow control device (220) may be formed such that a cross-sectional area of a the oil path formed in the restriction hole increases from the clutch master cylinder (62) side to the reservoir tank (64) side.

In the vehicular clutch device according to the above aspect of the invention, the clutch cylinder (66) may include a cylinder housing (108) in which a clutch output shaft (18) is inserted, an annular pressure chamber (114) that is formed radially outward from the clutch output shaft (18) in the cylinder housing (108) and receives the hydraulic pressure delivered from the clutch master cylinder (62), an annular first piston (116) that is slidably fitted in the cylinder housing (108) and transmits clutch operating force to the friction clutch (12), and at least one of an annular second piston (118) and an annular seal member (120). In this form of the invention, at least one of the annular second piston (118) and the annular seal member (120) is disposed adjacent to the first piston (116) so as to be movable away from the first piston (116) in the cylinder housing (108), and is adapted to receive the hydraulic pressure in the pressure chamber (114) and transmit thrust force to the first piston (116).

The vehicular clutch device according to the above aspect of the invention includes the flow control device that restricts flow of the hydraulic oil from the pressure chamber of the clutch master cylinder to the reservoir tank when the flow takes place in connection with the operation of the clutch pedal. Therefore, the amount of the hydraulic oil flowing from the pressure chamber of the clutch master cylinder to the reservoir tank according to the operation of the clutch pedal is reduced, as compared with the case where the clutch device does not include the flow control device. When the clutch pedal is subsequently depressed, the amount of ineffective pedal travel that does not contribute to generation of a hydraulic pressure in the pressure chamber of the clutch master cylinder can be reduced, thus assuring improved operability of the clutch pedal.

For example, the amount of the hydraulic oil flowing from the pressure chamber of the clutch master cylinder to the reservoir tank through a communication hole during the initial period of depression of the clutch pedal is reduced; therefore, the oil pressure in the pressure chamber is raised more quickly or in a shorter time, and the amount of ineffective pedal travel is reduced, thus assuring improved operability of the clutch pedal. Also, the amount of the hydraulic oil flowing from the pressure chamber of the clutch master cylinder to the reservoir tank through the communication hole during the operation of returning the clutch pedal to the original position is reduced; therefore, the flow inertia of the hydraulic oil directed from the clutch cylinder to the pressure chamber of the clutch master cylinder is reduced, and a negative pressure is less likely or unlikely to be generated in a pressure chamber of the clutch cylinder. As a result, the spacing between a pair of pistons of the clutch cylinder is prevented from expanding to be larger than a minute clearance necessary and sufficient to prevent transmission of vibrations; therefore, the amount of ineffective pedal travel can be reduced when the clutch pedal is subsequently depressed, thus assuring improved operability of the clutch pedal.

In the vehicular clutch device as described above, the flow control device has the restriction hole that gives flow resistance to the hydraulic oil that flows in an oil path that communicates with the pressure chamber of the clutch master cylinder and the reservoir tank. With this arrangement, the amount of the hydraulic oil flowing from the pressure chamber of the clutch master cylinder to the reservoir tank in connection with the operation of the clutch pedal is reduced, as compared with the case where no restriction hole is provided in the oil path. When the clutch is depressed, therefore, the amount of ineffective pedal stroke that does not contribute to generation of a hydraulic pressure in the pressure chamber of the clutch master cylinder can be reduced, thus assuring improved operability of the clutch pedal.

In the vehicular clutch device as described above, the clutch master cylinder includes the attachment tube having an opening formed at a distal end thereof and connecting the clutch master cylinder with the reservoir tank, and the flow control device is fitted and mounted in the opening of the attachment tube. Also, the restriction hole provided in the flow control device is formed such that the cross-sectional area of the oil path formed in the restriction hole increases from the clutch master cylinder side to the reservoir tank side. With this arrangement, the flow of the hydraulic oil from the pressure chamber of the clutch master cylinder toward the reservoir tank is restricted, whereas the flow of the hydraulic oil from the reservoir tank toward the pressure chamber of the clutch master cylinder is less likely or unlikely to be restricted, namely, the hydraulic oil flows more freely from the reservoir tank to the pressure chamber. Therefore, the amount of ineffective pedal travel during depression of the clutch pedal is sufficiently reduced, thus assuring improved operability of the clutch pedal. Furthermore, the workability or working efficiency is prevented from deteriorating when the hydraulic oil is charged into the clutch device in a vacuum, or air is removed from the hydraulic oil in the clutch device. Moreover, the vehicular clutch device can be manufactured at low cost, since a conventional clutch master cylinder can be used as it is, and the clutch device has a simple arrangement or configuration that leads to excellent manufacturability.

In the vehicular clutch device as described above, the clutch cylinder includes at least one of the annular second piston and the annular seal member that is disposed adjacent to the first piston that transmits clutch operating force to the friction clutch so as to be movable away from the first piston in the cylinder housing and is adapted to receive the hydraulic pressure in the pressure chamber and transmit thrust force to the first piston. With this arrangement, since the amount of the hydraulic oil flowing from the pressure chamber of the clutch master cylinder to the reservoir tank via the communication hole is reduced during an operation of returning or releasing the clutch pedal, the flow inertia of the hydraulic oil flowing from the clutch cylinder into the pressure chamber of the clutch master cylinder is reduced, and a negative pressure is less likely or unlikely to be generated in the pressure chamber of the clutch cylinder. As a result, the spacing between the first piston and the second piston or seal member is prevented from expanding to be larger than a minute clearance necessary and sufficient to prevent transmission of vibrations therebetween. When the clutch pedal is subsequently depressed, the amount of ineffective pedal travel can be reduced, thus assuring improved operability of the clutch pedal.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a cross-sectional view showing a friction clutch provided in a vehicle having a vehicular hydraulic clutch device to which the invention is applied, and its peripheral components;
FIG 2 is a view showing a part of the vehicular hydraulic clutch device for operating the friction clutch as shown in FIG 1;
FIG. 3 is a cross-sectional view showing a clutch master cylinder shown in FIG. 2 which is however not according to the invention;
FIG. 4 is a cross-sectional view showing a clutch slave cylinder shown in FIG. 1;
FIG. 5 is an enlarged cross-sectional view showing in enlargement a chamber of the clutch master cylinder of FIG. 3;
FIG. 6 is a cross-sectional view showing a section as viewed in the direction of arrows VI - VI in FIG. 5;
FIG 7 is an enlarged cross-sectional view showing in enlargement a chamber of the clutch master cylinder of FIG 3;
FIG 8 is view useful for explaining an operation of the vehicular hydraulic clutch device including a one way restrictor shown in FIG. 5;
FIG. 9 is a view useful for explaining the operation of the vehicular hydraulic clutch device including the one way restrictor shown in FIG 5;
FIG. 10 is a view useful for explaining the operation of the vehicular hydraulic clutch device including the one way restrictor shown in FIG. 5;
FIG. 11 is a view useful for explaining an operation of a vehicular hydraulic clutch device that is not provided with the one way restrictor shown in FIG 5
FIG. 12 is a graph showing one example of experimental data indicating the relationship between the pedal effort and the pedal travel during depression of a clutch pedal, in the case where the clutch pedal is depressed subsequently to a relatively slow operation of returning the clutch pedal and the case where the clutch pedal is depressed subsequently to a relatively quick operation of returning the clutch pedal, in the clutch device that is not provided with the one way restrictor shown in FIG. 5;

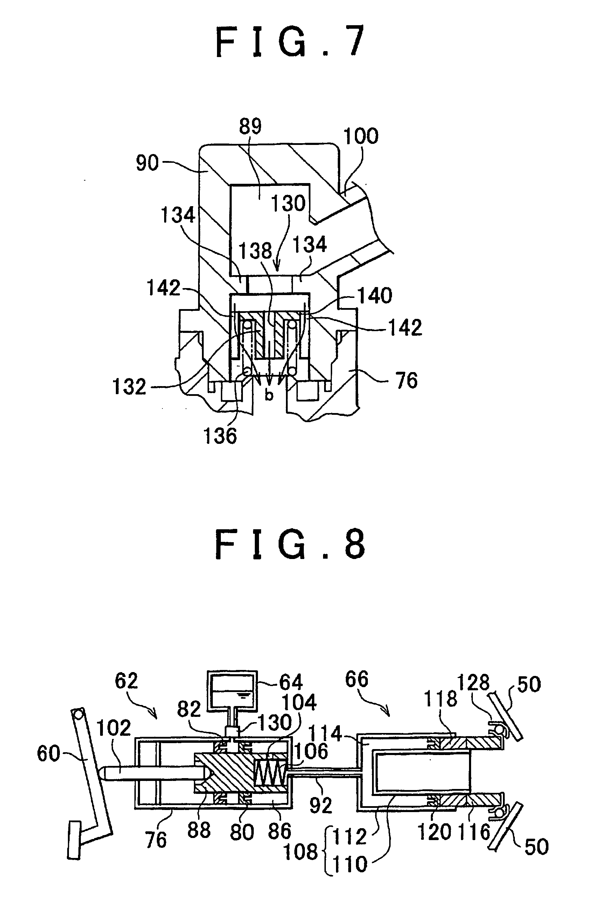

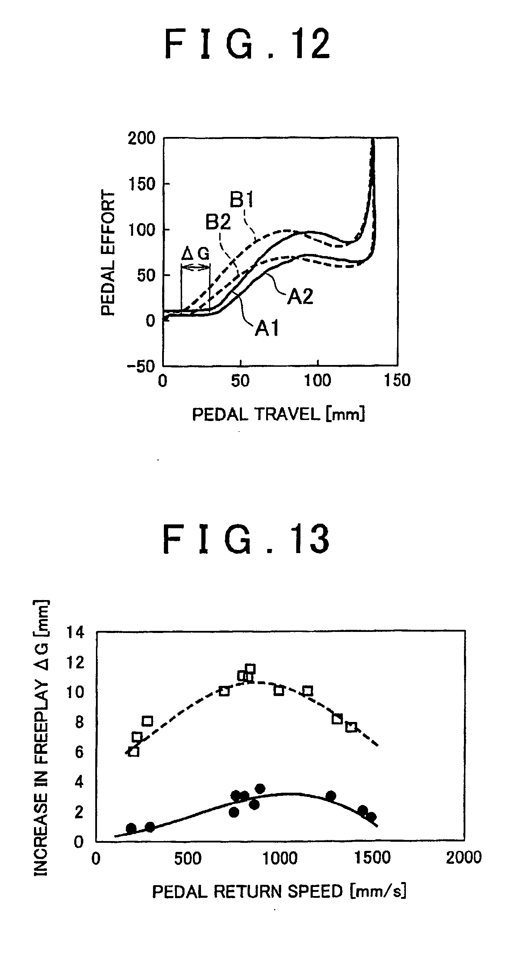

FIG. 13 is a graph showing one example of experimental data indicating the relationship between the pedal return speed at which the clutch pedal is returned to the release position from a depressed state as shown in FIG. 8, and a difference in the amount of pedal travel (an increase in freeplay) from the time when the operation of returning the clutch pedal is completed to the time when the hydraulic pressure starts rising during depression of the clutch pedal subsequent to the clutch returning operation, with respect to the clutch device provided with the one way restrictor and the clutch device that is not provided with the one way restrictor,
FIG. 14 is a cross-sectional view showing a one way restrictor as a flow control device not in accordance with the invention;
FIG. 15 is a cross-sectional view showing a one way restrictor as a flow control device not in accordance with the invention;
FIG. 16 is a cross-sectional view showing a one way restrictor as a flow control device not in accordance with the invention;
FIG. 17 is a cross-sectional view showing the one way restrictor as the flow control device not in accordance with the invention;
FIG. 18 is a cross-sectional view showing a one way restrictor as a flow control device not in accordance with the invention; the invention;
FIG 19 is a cross-sectional view showing the one way restrictor as the flow control device not in accordance with the invention;
FIG. 20 is a cross-sectional view showing a one way restrictor as a flow control device. not in accordance with the invention;
FIG. 21 is a cross-sectional view showing the one way restrictor as the flow control device not in accordance with the invention;
FIG. 22 is a cross-sectional view showing a one way restrictor as a flow control device not in accordance with the invention;
FIG 23 is a cross-sectional view showing the one way restrictor as the flow control device not in accordance with the invention;
FIG 24 is a cross-sectional view showing a restriction member as a flow control device provided in an not in accordance with embodiment of the invention;
FIG. 25 is a cross-sectional view showing a restriction member as a flow control device not in accordance with the invention;
FIG. 26 is a cross-sectional view showing a restriction member as a flow control device not in accordance with the invention;
FIG. 27 is a cross-sectional view showing a restriction control valve as a flow control device not in accordance with the invention;
FIG 28 is a cross-sectional view showing the restriction control valve as the flow control device not in accordance with the invention;
FIG. 29 is a cross-sectional view showing a restriction control valve as a flow control device not in accordance with the invention;
FIG. 30 is a cross-sectional view showing the restriction control valve as the flow control device not in accordance with the invention;
FIG. 31 is a cross-sectional view showing the restriction control valve as the flow control device not in accordance with the invention;
FIG. 32 is a cross-sectional view showing a hose band as a flow control device not in accordance with the invention; and
FIG 33 is a cross-sectional view showing a friction clutch provided in a vehicle having a vehicular hydraulic clutch device according to a further embodiment of the invention, and its peripheral components.

### DETAILED DESCRIPTION OF EMBODIMENTS

Some embodiments of the invention will be described in detail with reference to the drawings. The structures of the following embodiments as shown in the drawings are simplified or modified as needed, and the dimensional ratios and shapes of individual parts or components depicted in the drawings are not necessarily correct.

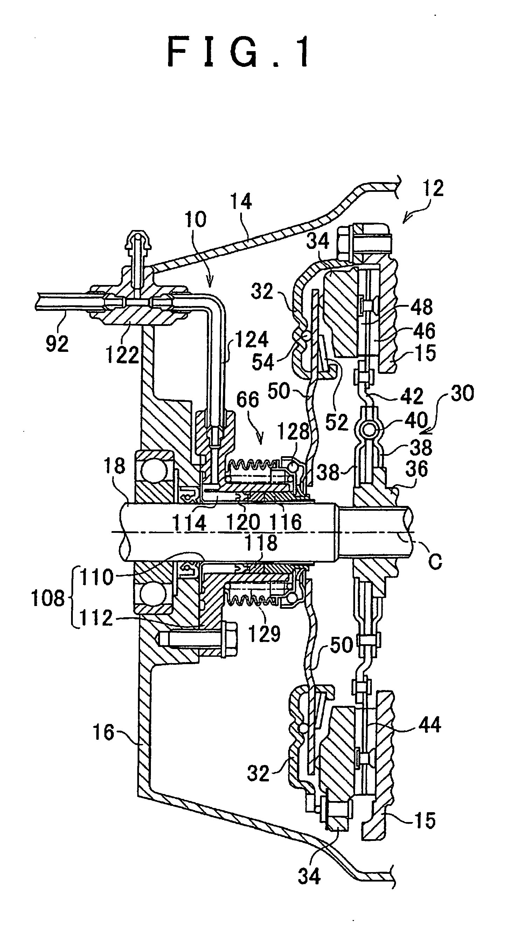

FIG 1 is a cross-sectional view showing a friction clutch 12 provided in a vehicle including a vehicular hydraulic clutch device 10, and its peripheral components. In FIG 1, the friction clutch 12 is a dry single-plate type disc clutch that provides a part of a power transmission path extending from a power source to driving wheels of the vehicle, and serves as a friction coupling that transmits power by friction. In this embodiment, the friction clutch 12 is housed in a cylindrical clutch housing 14 that is coupled integrally to an engine (not shown) corresponding to the power source and a housing of a so-called constant-mesh, parallel-rod type manual transmission (not shown) that is well known in the art. The friction clutch 12 is disposed between a disc-shaped flywheel 15 that is fixed to one end portion of an output shaft (crankshaft) of the engine and is driven to rotate as a unit with the output shaft, and an input shaft 18 of the manual transmission which is disposed concentrically with the flywheel 15 so as to be rotatable relative to the flywheel 15. The input shaft 18 is a rotary shaft that extends through a partition wall 16 provided between the manual transmission and the friction clutch 12, and is rotatably supported by the partition wall 16.

The friction clutch 12 includes a clutch disc 30 that is spline-fitted on a distal end portion of the input shaft 18, and an annular pressure plate 34 disposed on one side of the clutch disc 30 opposite to the flywheel 15 such that the pressure plate 34 can be moved toward or away from the clutch disc 30, within a clutch cover 32 fixed to a radially outer portion of the flywheel 15. The input shaft 18 of the manual transmission also serves as an output shaft (clutch output shaft) of the friction clutch 12.

The clutch disc 30 includes a cylindrical hub 36 that is spline-fitted at its inner circumferential surface on the input shaft 18, a pair of annular friction plates 38 fixed to a radially outer portion of the hub 36, and a disc plate 42 in the form of an annular plate sandwiched between the above-indicated pair of friction plate 38 such that power can be transmitted to the friction plates 38 via a plurality of damper springs 40 arranged in the circumferential direction. The clutch disc 30 further includes a disc plate 44 in the form of a flexible, annular plate whose radially inner portion is fixed to a radially outer portion of the disc plate 42, and friction materials (facings, linings) 46, 48 in the form of annular plates that are respectively fixed to the opposite side faces of the disc plate 44 which are opposed to the flywheel 15 and the pressure plate 34, respectively. The friction materials 46, 48 are formed of a material having a high coefficient of friction, which is formed by kneading and compressing, for example, glass fibers, phenol resin, rubber, and a friction adjusting agent.

The friction clutch 12 also includes a pair of annular support members 52, 54 disposed between the pressure plate 34 and the clutch cover 32, and a diaphragm spring 50 in the form of an annular plate having a radially middle portion sandwiched between the support members 52, 54 and a radially outer portion or outer edge that normally presses the pressure plate 34 against the clutch disc 30. In operation, if the inner edge of the diaphragm spring 50 is pressed toward the clutch disc 30 in the axial direction C (see FIG. 1), the outer edge of the diaphragm spring 50 rotates or pivots about the radially middle portion supported by the support members 52, 54 so as to be spaced apart from the pressure plate 34. If the inner edge of the diaphragm spring 50 ceases to be pressed toward the flywheel 15 (the clutch disc 30), the diaphragm spring 50 returns to its normal position at which the outer edge of the diaphragm spring 50 presses the pressure plate 34 against the clutch disc 30.

In the friction clutch 12 constructed as described above, when no external force is applied to the inner edge of the diaphragm spring 50, the pressure plate 34 is pressed by the outer edge of the diaphragm spring 50, toward the clutch disc 30, so that the clutch disc 30 is sandwiched between the pressure plate 34 and the flywheel 15, and the clutch disc 30 and the flywheel 15 are engaged by friction via the friction material 46 while the clutch disc 30 and the pressure plate 34 are engaged by friction via the friction material 48. As a result, the clutch disc 30 and the flywheel 15 and pressure plate 34 are brought into a fully engaged state, so that power can be transmitted between the flywheel 15 and the clutch disc 30. When the inner edge of the diaphragm spring 50 is operated toward the clutch disc 30 in the axial direction C, the force with which the pressure plate 34 is pressed against the clutch disc 30 changes in accordance with the force applied to the inner edge, which will be called "clutch operating force" when appropriate. If the force applied to the pressure plate 34 is completely eliminated or becomes equal to zero, the frictional engagements between the clutch disc 30 and the flywheel 15 and pressure plate 34 are released so that these members 30, 15, 34 are brought into a fully released state. As a result, power transmission between the flywheel 15 and the clutch disc 30 is cut off, namely, no power is transmitted between the flywheel 15 and the clutch disc 30.

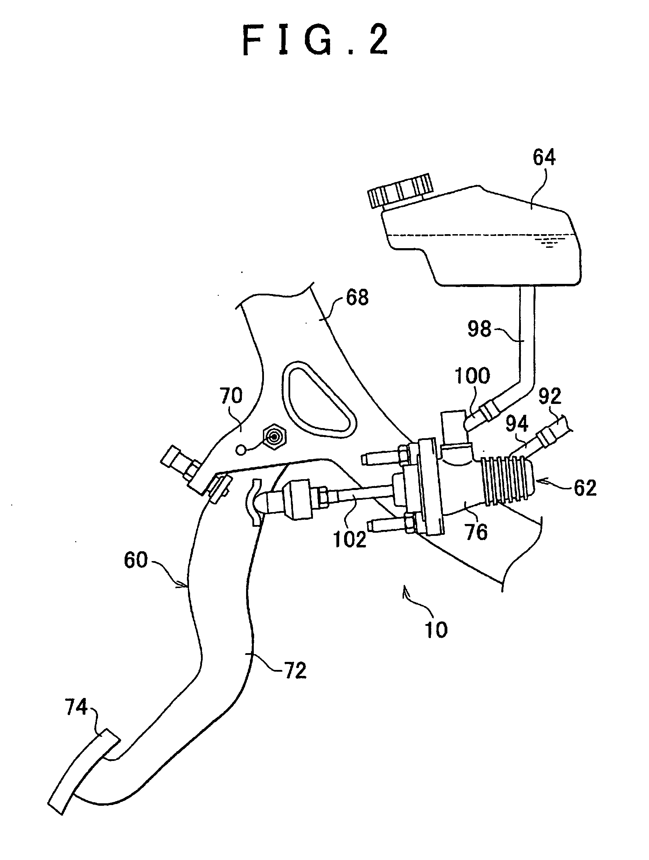

FIG 2 shows a part of the construction of the vehicular hydraulic clutch device 10 for operating the friction clutch 12 as shown in FIG. 1. In FIG. 1 and FIG. 2, the vehicular hydraulic clutch device 10 includes a clutch pedal 60 (see FIG 2) that is operated (depressed) by the driver so as to switch the operating state of the friction clutch 12, and a clutch master cylinder 62 (see FIG 2) having a pressure-chamber 86 from which a clutch-operating hydraulic pressure is delivered in response to the operation (depression) of the clutch pedal 60, according to the amount of depression (operation) of the clutch pedal 60. The clutch device 10 further includes a reservoir tank 64 (see FIG 2) in which redundant hydraulic oil is stored, and a clutch slave cylinder 66 (see FIG 1) that operates the friction clutch 12 upon receipt of the clutch-operating hydraulic pressure delivered from the clutch master cylinder 62. The clutch slave cylinder 66 corresponds to the above-mentioned clutch cylinder of the invention.

The clutch pedal 60 includes a pedal lever 72 that is supported by a clutch pedal bracket 70 provided on a dash panel 68 as a partition between the, vehicle compartment or cabin and the engine room such that a proximal portion of the pedal lever 72 is pivotable about one axis O, and a pedal pad 74 that serves as a portion depressed (operated) by the driver and is fixed to a distal end portion of the pedal lever 72. A return spring (not shown) is provided for applying bias force to the pedal lever 72 in a direction approaching the driver (to the left in FIG 1). If the driver presses down the pedal pad 74 against the bias force, the friction clutch 12 is operated to a release state. If the driver ceases to press down the pedal pad 74, namely, if the driver releases the pedal pad 74, the friction clutch 12 is brought into an engaged state.

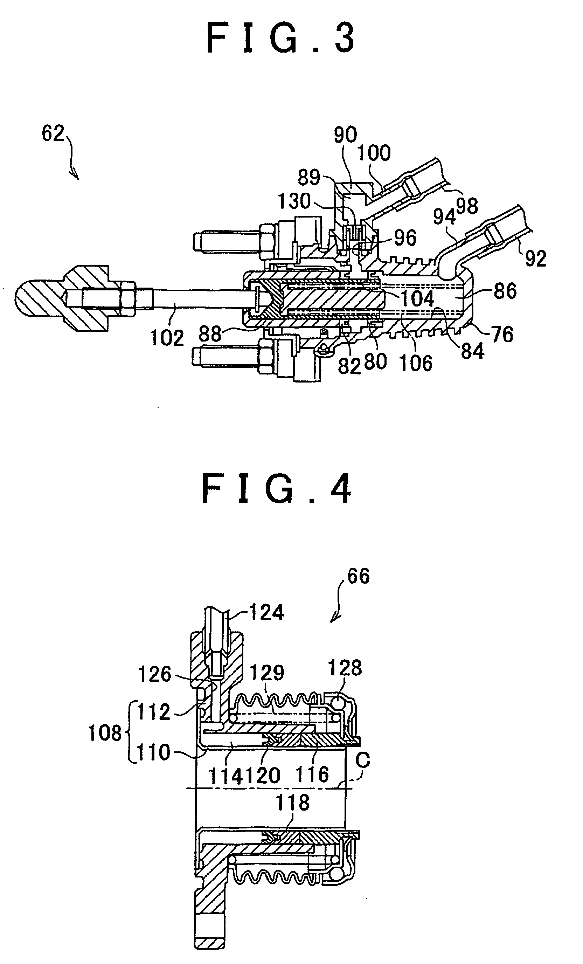

FIG 3 is a cross-sectional view of the clutch master cylinder 62 as shown in FIG. 2. In FIG 2 and FIG 3, the clutch master cylinder 62, which serves to convert a pedal effort applied to the clutch pedal 60 into a hydraulic pressure, includes a cylinder body or cylinder housing 76 fixed to the dash panel 68, for example, and having a distal end portion closed, and a first cup 80 and a second cup 82 as a pair of annular seal members fitted and mounted in the cylinder housing 76 such that the first and second cups 80, 82 are spaced a certain distance from each other in the axial direction. The clutch master cylinder 62 further includes a piston 88 that is fitted in the cylinder housing 76 so as to be slidable along the inner circumferential surfaces of the first cup 80 and second cup 82. The piston 88 cooperates with an inner circumferential surface 84 of the cylinder housing 74 to form a pressure chamber 86 in which the hydraulic pressure is developed.

An attachment tube 94 is mounted on a distal end portion of the cylinder housing 76 so as to protrude therefrom. The attachment tube 94 has an opening that communicates with the pressure chamber 86 in the cylinder housing 76, and one end portion of a connecting hose (elastic tube) 92 for connecting the clutch master cylinder 62 to the clutch slave cylinder 66 is fitted on a distal end portion of the attachment tube 94. Also, a cylindrical chamber housing (chamber) 90 that is closed at its upper end and has a certain volume of reservoir chamber 89 is fitted and mounted in a radially outer, upper portion of the cylinder housing 76. The reservoir chamber 89 in the chamber housing 90 communicates with the pressure chamber 86 in the cylinder housing 76, via a hydraulic oil supply hole 96 formed through the cylinder housing 76 at a location between the first cup 80 and the second cup 82 as viewed in the axial direction of the cylinder housing 76. An attachment tube 100 is mounted on the chamber housing 90 so as to protrude therefrom. The coupling tube 100 protrudes from the periphery (outer circumferential surface) of the chamber housing 90 and is formed at its distal end with an opening that communicates with the reservoir chamber 89 in the chamber housing 90. One end portion of a connecting hose (elastic tube) 98 for connecting the clutch master cylinder 62 to the reservoir tank 53 is fitted on an outer circumferential surface of a distal end portion of the attachment tube 100. In this embodiment, the hydraulic oil supply hole 96, reservoir chamber 89 in the chamber housing 90, attachment tube 100 and the connecting hose 98 form an oil path that communicates the pressure chamber 86 of the clutch master cylinder 62 with the reservoir tank 64. Also, the attachment tube 94, connecting hose 92, and a relay member 122 and a pipe 124 (which will be described later) form an oil path that communicates the pressure chamber 86 of the clutch master cylinder 62 with the clutch slave cylinder 66.

The clutch master cylinder 62 further includes a rod 102 for transmitting a movement of the pedal lever 72 caused by depression (operation) of the clutch pedal 60 to the piston 88. The rod 102 is disposed between one end face of the piston 88 opposite to the other end face that faces the pressure chamber 86, and the pedal lever 72. The piston 88 is arranged to slide in the cylinder housing 76 between a position closest to one end of the pressure chamber 86, i.e., a position at which the volume of the pressure chamber 86 is maximized as shown in FIG. 3, and a position closest to the other end of the pressure chamber 86, i.e., a position at which the volume of the pressure chamber 86 is minimized, according to the amount of depression of the clutch pedal 60. The piston 88 is formed with a communication hole 104 that communicates the pressure chamber 86 with the hydraulic oil supply hole 98 when the piston 88 is moved to the position closest to the above-indicated one end of the pressure chamber 86. The communication hole 104 serves as an oil escape hole. In the initial period of operation of the clutch pedal 60 in which the amount of operation of the clutch pedal 60 is less than a predetermined value, the communication hole 104 keeps the pressure chamber 86 and the reservoir tank 64 in communication with each other, until the communication hole 104 is fully closed by the first cup 80 due to the movement of the piston 88 from the position clo'sest to the above-indicated one end toward the other end by a certain distance. A return spring 106 for biasing the piston 88 to the position adjacent to the rod 102 (i.e., the position closest to the one end of the pressure chamber 86) is provided in the pressure chamber 86 of the clutch master cylinder 62. When the clutch pedal 60 is released (namely, when the clutch lever 72 returns to the original position), the piston 88 is returned, under the bias force of the return spring 106, to the position closest to the above-indicated one end of the pressure chamber 86.

In the clutch master cylinder 62 constructed as described above, the piston 88 moves in accordance with the depression of the clutch pedal 60, and the communication hole 104 of the piston 88 is fully closed by the first cup 80, so that the pressure chamber 86 is brought into a fluid-tight condition. Then, the piston 88 is further moved toward the position closest to the other end of the pressure chamber 86, so that the hydraulic oil in the pressure chamber 86 is compressed, and a certain clutch-operating hydraulic pressure starts building up in the pressure chamber 86.

FIG. 4 is a cross-sectional view of a concentric slave type clutch slave cylinder 66 as shown in FIG. 1. In FIG 1 and FIG. 4, the clutch slave cylinder 66 includes a cylinder housing 108 that is fixed to the partition wall 16 such that the input shaft 18 is inserted through the cylinder housing 108. The cylinder housing 108 is composed of an inner housing 110 and an outer housing 112. The clutch slave cylinder 66 also includes an annular pressure chamber 114 that is formed in the cylinder housing 108 at the periphery of the input shaft 18 so as to receive the clutch-operating hydraulic pressure delivered from the clutch master cylinder 62. The clutch slave cylinder 66 further includes an annular output piston 116 that is slidably inserted in the cylinder housing 108 and serves to transmit the clutch operating force to the friction clutch 12, an annular second piston 118 that is disposed between the output piston 116 and the pressure chamber 114 at a position adjacent to the output piston 116 and serves to receive the clutch operating hydraulic pressure in the pressure chamber 14 and transmit thrust force to the output piston 116, and a seal member 120 that is disposed between the second piston 118 and the pressure chamber 114 at a position adjacent to the second piston 118 and serves to keep the pressure chamber 114 fluid-tight.

To the cylinder housing 108 is connected one end portion of the pipe 124 that is connected to the connecting hose 92 via the relay member 122 provided in the clutch housing 14, for example. The pipe 124 communicates with the pressure chamber 114 via a communication hole 126 formed in the cylinder housing 108. Thus, the pressure chamber 114 of the clutch slave cylinder 66 communicates with the pressure chamber 86 of the clutch master cylinder 56, via the communication hole 126, pipe 124, relay member 122, and the connecting hose 92.

As shown in FIG. 1, a release bearing 128 is provided between the output piston 116 and the diaphragm spring 50, for transmitting force between the output piston 116 and the diaphragm spring 50 in the axial direction C while allowing the output piston 116 and the diaphragm spring 50 to rotate relative to each other. The release bearing 128 transmits clutch operating force from the output piston 116 to the diaphragm spring 50, and also transmits spring reaction force from the diaphragm spring 50 to the piston 116. The release bearing 128 is biased toward the diaphragm spring 50 by means of a spring 129 provided between the release bearing 128 and the cylinder housing 108, such that the release bearing 128 is kept abutting on the diaphragm spring 50.

In operation, the output piston 116 is moved in response to the clutch-operating hydraulic pressure supplied to the pressure chamber 114, from a position corresponding to the fully engaged state of the friction clutch 12, i.e., a position at which the volume of the pressure chamber 114 is minimized as shown in FIG 1, to a position corresponding to the fully released state of the friction clutch 12, i.e., a position at which the volume of the pressure chamber 86 is maximized as shown in FIG. 4. The clutch operating force transmitted from the output piston 116 to the diaphragm spring 50 increases as the clutch-operating hydraulic pressure in the pressure chamber 114 increases. In this embodiment, the piston of the clutch slave cylinder 66 consists of two pistons, namely, the output piston 116 and the second piston 118 arranged in the axial direction C. When the output piston 116 is placed at the position corresponding to the fully engaged state of the friction clutch 12, a minute clearance is formed between the output piston 116 and the second piston 118 so as to prevent vibrations transmitted from the engine to the output piston 116 via the friction clutch 12 from being transmitted to the second piston 118.

In the clutch slave cylinder 66 constructed as described above, the output piston 116 moves according to the clutch-operating hydraulic pressure supplied to the pressure chamber 114, so that the clutch operating force is transmitted to the inner edge of the diaphragm spring 50. The clutch operating force applied to the diaphragm spring 50 increases as the clutch-operating hydraulic pressure supplied to the pressure chamber 114 increases, namely, as the output piston 116 moves to the right as viewed in FIG 1.

In addition to the construction as described above, the vehicular hydraulic clutch device 10 further includes a one way restrictor 130 that permits flow of the hydraulic oil from the reservoir tank 64 to the pressure chamber 86 of the clutch master cylinder 62 and restricts flow of the hydraulic oil from the pressure chamber 86 of the clutch master cylinder 62 to the reservoir tank 64. The one way restrictor 130 serves as a flow control device that restricts flow of the hydraulic oil from the pressure chamber 86 of the clutch master cylinder 62 toward the reservoir tank 64 when the flow takes place in connection with the operation of the clutch pedal 60.

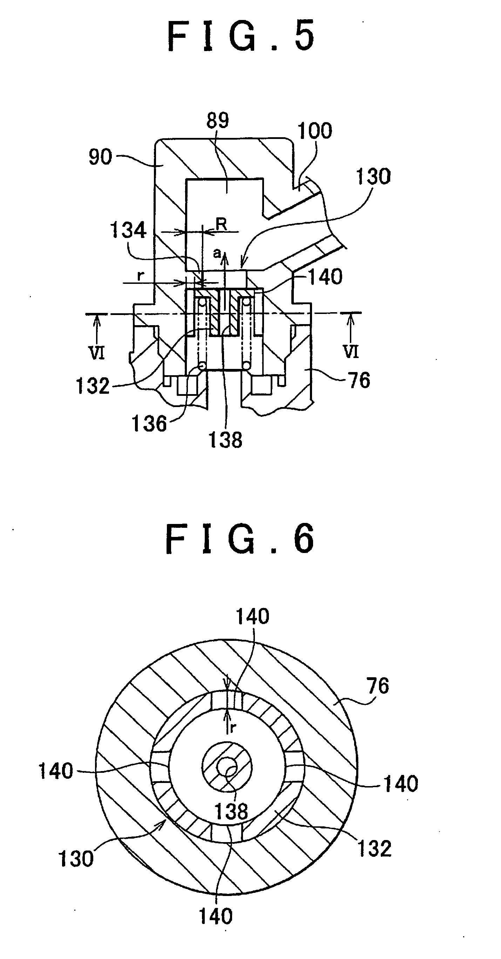

FIG. 5 is a cross-sectional view showing in enlargement the chamber housing 90 as a part of the clutch master cylinder 62 of FIG 3. FIG 6 is a cross-sectional view showing a section as seen in the direction of arrows VI-VI in FIG. 5. In FIG 5 and FIG 6, the one way restrictor 130 includes a cylindrical valve element 132 fitted in the reservoir chamber 89 so as to be movable in the direction of flow of the hydraulic oil, in the chamber housing 90 as a part of the oil path that communicates the pressure chamber 86 of the clutch master cylinder 62 with the reservoir tank 64. The one way restrictor 130-also includes an annular valve seat 134 that protrudes radially inwards from a part of the inner circumferential surface of the chamber housing 90 which is located closer to the reservoir tank 64 than the valve element 132, so as to limit movement of the valve element 132 when it abuts on the valve seat 134, and a spring 136 that biases the valve element 132 toward the valve seat 134. The length of the spring 136 is set so that the bias force applied to the valve element 132 becomes substantially equal to zero when the valve element 132 abuts on the valve seat 134 as shown in FIG 5. The valve element 132 is formed concentrically with a restriction hole 138 having a sufficiently small diameter as compared with the inside diameters of the chamber housing 90, attachment tube 100 and the hydraulic oil supply hole 96. The restriction hole 138 serves to give flow resistance to the hydraulic oil that. flows in the oil path between the pressure chamber 86 of the clutch master cylinder 62 and the reservoir tank 64.

The valve element 132 is formed at its radially outer portion with a plurality of slots 140 (four slots in this embodiment) that are arranged at certain intervals in the circumferential direction. The depth, or radial dimension r, of each of the slots 140 is smaller than the length of projection, or radial dimension R, of the valve seat 134, as shown in FIG. 5. When the oil pressure in the pressure chamber 86 of the clutch master cylinder 62 is equal to or higher than the oil pressure in the reservoir tank 64, the valve element 132 receives the oil pressure from the pressure chamber 86 of the clutch master cylinder 62 and is kept abutting or resting on the valve seat 134 as shown in FIG 5. In the condition as shown in FIG 5, the hydraulic oil directed from the pressure chamber 86 of the clutch master cylinder 62 toward the reservoir tank 64 flows to the reservoir tank 64 through the restriction hole 138, as indicated by arrow "a" in FIG 5. When the oil pressure in the pressure chamber 86 of the clutch master cylinder 62 is lower than the oil pressure in the reservoir tank 64, the valve element 132 receives the oil pressure from the reservoir tank 64 and is moved away from the valve seat 134 toward the clutch master cylinder 62, as shown in FIG 7. In the condition as shown in FIG 7, the hydraulic oil directed from the reservoir tank 64 toward the pressure chamber 86 of the clutch master cylinder 62 flows to the pressure chamber 86 of the clutch master cylinder 62, through the restrictor hole 138 and a plurality of channels 142 respectively formed between the above-indicated plurality of slots 140 and the inner circumferential surface of the chamber housing 90, as indicated by arrows "b" in FIG 7. Thus, the one way restrictor 130 serves to reduce a cross-sectional area of the channels by closing the channels 142 with the valve seat 134 when the oil pressure in the pressure chamber 86 of the clutch master cylinder 62 is equal to or higher than the oil pressure in the reservoir tank 64, and increase the cross-sectional area of the channels by allowing the hydraulic oil to flow through the channels 142 when the oil pressure in the pressure chamber 86 of the clutch master cylinder 62 is lower than the oil pressure in the reservoir tank 64. With the thus constructed one way restrictor 130 provided in the vehicular hydraulic clutch device 10, the resistance to the flow of the hydraulic oil from the pressure chamber 86 of the clutch master cylinder 62 to the reservoir tank 64 is made larger than the resistance to the flow of the hydraulic oil from the reservoir tank 64 to the pressure chamber 86 of the clutch master cylinder 62.

The operation of the vehicular hydraulic clutch device 10 provided with the one way restrictor 130 as described above will be described referring to FIG 8 - FIG. 10. FIG 8 - FIG. 10 and FIG. 11 (which will be described later) schematically illustrate the vehicular hydraulic clutch device 10.

FIG 8 shows a condition of the hydraulic clutch device 10 established when the clutch pedal 60 is fully depressed to achieve the maximum amount of depression, and the piston 88 of the clutch master cylinder 62 and the output piston 116 of the clutch slave cylinder 66 are placed in respective positions corresponding to the fully released state of the friction clutch 12. If the clutch pedal 60 ceases to be depressed, i.e., the clutch pedal 60 is released or returned to the original position, from the condition as shown in FIG 8, the output piston 160 and the second piston 118 are moved away from the diaphragm spring 50 under the spring reaction force of the diaphragm spring 50, and the piston 88 is moved away from the position at which the connecting hose 92 is connected, under the spring reaction force of the return spring 106.

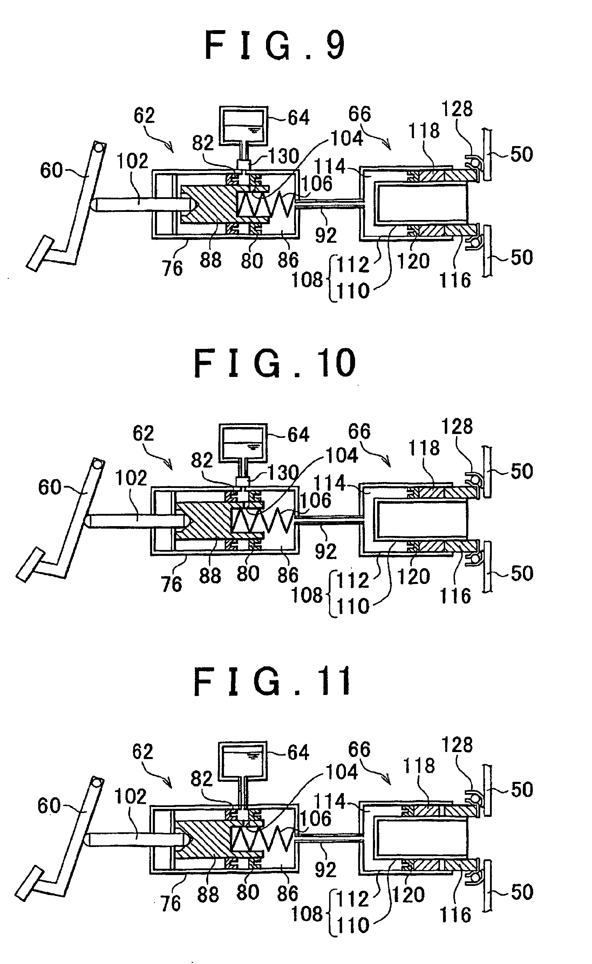

FIG. 9 shows a condition of the hydraulic clutch device 10 established immediately before the communication hole 104 formed in the piston 88 of the clutch master cylinder 62 communicates with the hydraulic oil supply hole 98 and the pressure chamber 86, while the piston 88 is moved from the condition as shown in FIG. 8 according to the operation of returning the clutch pedal 60 to the original position. In the condition as shown in FIG 9, the hydraulic oil in the pressure chamber 114 and the pressure chamber 86 is in a state of flowing from the pressure chamber 114 into the pressure chamber 86. If the operation of returning the clutch pedal 60 is continued after the condition as shown in FIG 9 is established, the piston 88 is moved toward the position corresponding to the fully engaged state of the friction clutch 12.

FIG 10 shows a condition of the hydraulic clutch device 10 in which the clutch pedal 60 has been completely returned to the original position and the piston 88 has been moved to the position corresponding to the fully engaged state of the friction clutch 12. The communication hole 104 is arranged to communicate the hydraulic oil supply hole 95 with the pressure chamber 86 during the time of transition from the condition as shown in FIG 9 to the condition as shown in FIG 10. Immediately after the condition as shown in FIG. 10 is established, the hydraulic oil in the pressure chamber 86 has a tendency of flowing toward the reservoir tank 64 due to the inertia of the hydraulic oil flowing from the pressure chamber 114 into the pressure chamber 86. In this device, however, the one way restrictor 130 is provided as a flow control device that restricts flow of the hydraulic oil from the pressure chamber 86 of the clutch master cylinder 62 toward the reservoir tank 64; therefore, the tendency of the hydraulic oil to flow toward the reservoir tank 64 is suppressed or restricted by the one way restrictor 130. Namely, the amount of the hydraulic oil flowing toward the reservoir tank 64 is restricted at the restrictor hole 138 of the valve element 132 of the one way restrictor 130. If the amount of the hydraulic oil flowing toward the reservoir tank 64 is not restricted, the hydraulic oil in the pressure chamber 86 would flow into the reservoir tank 64 due to the flow inertia of the hydraulic oil immediately after the operation of returning the clutch pedal 60 is completed, so that a negative pressure is generated in the pressure chamber 114 and causes the second piston 118 to move away from the output piston 116, resulting in an increase in the spacing between the second piston 118 and the output piston 116. With the above arrangement in which the amount of the hydraulic oil flowing toward the reservoir tank 64 is restricted, the spacing between the second piston 118 and the output piston 116 is favorably prevented from expanding to be large than the above-mentioned minute clearance necessary and sufficient to prevent transmission of vibrations. Namely, the sparing between the output piston 116 and the second piston 118 is less likely or unlikely to increase when the clutch pedal 60 is relatively quickly released or returned to the original position.

In the meantime, FIG. 11 shows a condition of a hydraulic clutch device that is not provided with the one way restrictor 130, which appears when the clutch pedal 60 is relatively quickly released or returned. In this case, the hydraulic oil in the pressure chamber 86 flows into the reservoir tank 64 due to the flow inertia thereof, whereby a negative pressure is generated in the pressure chamber 114 and causes the second piston 118 to move away from the output piston 116. As a result, the spacing between the second piston 118 and the output piston 116 expands to be larger than the above-mentioned minute clearance necessary and sufficient to prevent transmission of vibrations.

FIG 12 shows one example of experimental data indicating the relationship between the pedal effort or pedal pressure and the pedal travel (mm) when the clutch pedal 60 is depressed subsequently to a normal pedal-return operation in which the clutch pedal 60 is relatively slowly returned to the original position with the driver's foot placed on the pedal pad 74, in a clutch device that is not provided with the one way restrictor 130. For comparison purposes, FIG. 12 also shows one example of experimental data indicating the relationship between the pedal effort and the pedal travel (mm) when the clutch pedal 60 is depressed subsequently to an operation of returning the clutch pedal 60 in which the driver releases the clutch pedal 60 by taking his/her foot off the pedal pad 74, or a relatively quick pedal-return operation in which the clutch pedal 60 is returned to the original position at substantially the same speed as the above release operation. In FIG. 12, solid lines A1 A2 indicate the cases where relatively quick pedal-return operations were performed, and dotted lines B1 B2 indicate the cases where relatively slow pedal-return operations were performed. As shown in FIG. 12, when the clutch pedal 60 is depressed after a relatively quick pedal-return operation, an increase ΔG in freeplay appears, namely, a difference of about 15(mm) appears in the pedal travel at which the pedal effort (clutch-operating hydraulic pressure) starts rising, as compared with the case where the clutch pedal 60 is depressed after a relatively slow pedal-return operation.

FIG. 13 shows one example of experimental data showing the relationship between the pedal return speed (mm/s) at which the clutch pedal 60 that has been depressed (shown in FIG 8) is returned to the original position, and a difference in the pedal travel (increase ΔG in freeplay) from the position at which the pedal-return operation is completed, to the position at which the clutch-operating hydraulic pressure starts rising during depression of the clutch pedal 60 subsequent to the pedal-return operation, with respect to the case where the clutch device is provided with the one way restrictor 130 and the case where the clutch device is not provided with the one way restrictor 130. As shown in FIG. 13, experimental values on or in the vicinity of the solid line indicating the case where the clutch. device is provided with the one way restrictor 130 are significantly lower than experimental values on or in the vicinity of the dotted line indicating the case where the clutch device is not provided with the one way restrictor 130.

As described above the vehicular hydraulic clutch device 10 includes the one way restrictor (flow control device) 130 that restricts flow of the hydraulic oil from the pressure chamber 86 of the clutch master cylinder 62 toward the reservoir tank 64 when the flow takes place in connection with the operation of the clutch pedal 60. Therefore, the amount of the hydraulic oil flowing from the pressure chamber 86 of the clutch master cylinder 62 to the reservoir tank 64 in connection with the operation of the clutch pedal 60 is reduced, as compared with the case where the clutch device does not include the one way restrictor 130. When the clutch pedal 60 is subsequently depressed, the amount of ineffective pedal travel that does not contribute to generation of a hydraulic pressure in the pressure chamber 86 of the clutch master cylinder 62 can be reduced, thus assuring improved operability of the clutch pedal 60.

For example, in the initial period of depression of the clutch pedal 60, the amount of the hydraulic oil flowing from the pressure, chamber 86 of the clutch master cylinder 62 to the reservoir tank 64 through the communication hole 104 is reduced, so that the oil pressure in the pressure chamber 86 is raised more quickly or in a shorter time, which leads to reduction of the ineffective pedal travel and improved operability of the clutch pedal 60. Also, the amount of the hydraulic oil flowing from the pressure chamber 86 of the clutch master cylinder 62 to the reservoir tank 64 during the operation of returning the clutch pedal 60 is reduced, so that the flow inertia of the hydraulic oil directed from the clutch slave cylinder 66 to the clutch master cylinder 62 is reduced, and a negative pressure is less likely or unlikely to be generated in the pressure chamber 114 of the clutch slave cylinder 66. As a result, the spacing between the output piston 116 of the clutch slave cylinder 66 and the second piston 118 is prevented from expanding to be larger than a minute clearance necessary and sufficient to prevent transmission of vibrations between the pistons 116, 118; therefore, the amount of ineffective pedal travel can be reduced when the clutch pedal 60 is subsequently depressed, thus assuring improved operability of the clutch pedal 60.

In the vehicular hydraulic clutch device 10, the one way restrictor 130 has the restriction hole 138 that gives flow resistance to the hydraulic oil flowing in the oil path that communicates with the pressure chamber 86 of the clutch master cylinder 62 and the reservoir tank 64. With this arrangement, the amount of the hydraulic oil flowing from the pressure chamber 86 of the clutch master cylinder 62 to the reservoir tank 64 in connection with the operation of the clutch pedal 60 is reduced, as compared with the case where no restriction hole is provided in the oil path. Consequently, the amount of ineffective pedal travel that does not contribute to generation of a hydraulic pressure in the pressure chamber 86 of the clutch master cylinder 62 during depression of the clutch pedal 60 can be reduced, thus assuring improved operability of the clutch pedal 60.

In the vehicular hydraulic clutch device 10, the one way restrictor 130 is configured such that the resistance to flow of the hydraulic oil from the pressure chamber 86 of the clutch master cylinder 62 to the reservoir tank 64 becomes larger than the resistance to flow of the hydraulic oil from the reservoir tank 64 to the pressure chamber 86 of the clutch master cylinder 62. Therefore, the flow of the hydraulic oil from the pressure chamber 86 of the clutch master cylinder 62 toward the reservoir tank 64 is restricted, whereas the flow of the hydraulic oil from the reservoir. tank 64 toward the pressure chamber 86 of the clutch master cylinder 62 is less likely or unlikely to be restricted, namely, the hydraulic oil flows more freely from the reservoir tank 64 to the pressure chamber 86. Thus, the amount of ineffective pedal travel during depression of the clutch pedal 60 is sufficiently reduced, thus assuring improved operability of the clutch pedal 60. Furthermore, the workability or working efficiency is prevented from deteriorating when the hydraulic oil is charged into the hydraulic clutch device 10 in a vacuum, or air is removed from the hydraulic oil in the clutch device 10.

In the vehicular hydraulic clutch device 10, the one way restrictor 130 permits flow of the hydraulic oil from the reservoir tank 64 to the pressure chamber 86 of the clutch master cylinder 62, and restricts flow of the hydraulic oil from the pressure chamber 86 of the clutch master cylinder 62 to the reservoir tank 64. Therefore, the flow of the hydraulic oil from the pressure chamber 86 of the clutch master cylinder 62 toward the reservoir tank 64 is restricted, whereas the flow of the hydraulic oil from the reservoir tank 64 toward the pressure chamber 86 of the clutch master cylinder 62 is less likely or unlikely to be restricted, namely, the hydraulic oil flows more freely from the reservoir tank 64 to the pressure chamber 86. Thus, the amount of ineffective pedal travel during depression of the clutch pedal 60 is sufficiently reduced, thus assuring improved operability of the clutch pedal 60. Furthermore, the workability or working efficiency is prevented from deteriorating when the hydraulic oil is charged into the hydraulic clutch device 10 in a vacuum, or air is removed from the hydraulic oil in the clutch device 10.

In the vehicular hydraulic clutch device 10, the one way restrictor 130 reduces the cross-sectional area of the channel when the oil pressure in the clutch master cylinder 62 is equal to or higher than the oil pressure in the reservoir tank 64, and increases the cross-sectional area of the channel when the oil pressure in the clutch master cylinder 62 is lower than the oil pressure in the reservoir tank 64. Therefore, the flow of the hydraulic oil from the pressure chamber 86 of the clutch master cylinder 62 toward the reservoir tank 64 is restricted, whereas the flow of the hydraulic oil from the reservoir tank 64 toward the pressure chamber 86 of the clutch master cylinder 62 is less likely or unlikely to be restricted, namely, the hydraulic oil flows more freely from the reservoir tank 64 to the pressure chamber 86. Thus, the amount of ineffective pedal travel during depression of the clutch pedal 60 is sufficiently reduced, thus assuring improved operability of the clutch pedal 60. Furthermore, the workability or working efficiency is prevented from deteriorating when the hydraulic oil is charged into the hydraulic clutch device 10 in a vacuum, or air is removed from the hydraulic oil in the clutch device 10.

In the vehicular hydraulic clutch device 10, the one way restrictor 130 is fitted in the chamber housing 90 that provides a part of the oil path that communicates with the pressure chamber 86 of the clutch master cylinder 62 and the reservoir tank 64, such that the one way restrictor 130 is movable in the direction of flow of the hydraulic oil. The one way restrictor 130 includes the cylindrical valve element 132 that has a plurality of slots 140 formed in its radially outer portion at certain intervals in the circumferential direction, and forms a plurality of channels 142 between the inner walls of the slots 140 and the inner circumferential surface of the chamber housing 90. The one way restrictor 130 also includes the annular valve seat 134 that protrudes radially inwards from a part of the inner circumferential surface of the chamber housing 90 which is located closer to the reservoir tank 64 than the valve element 132, so as to restrict movement of the valve element 132 when it abuts on the valve seat 134, and the spring 136 that biases the valve element 132 toward the valve seat 134. With this arrangement, when the hydraulic oil flows from the pressure chamber 86 of the clutch master cylinder 62 toward the reservoir tank 64, the valve element 132 that is moved to be closer to the reservoir tank 64 in response to the flow of the hydraulic oil abuts on the valve seat 134, thereby to close the above-indicated plurality of channels 142 and thus restrict the flow of the hydraulic oil toward the reservoir tank 64. When the hydraulic oil flows from the reservoir tank 64 toward the pressure chamber 86 of the master cylinder 62, the valve element 132 that receives the flow of the hydraulic oil is moved away from the valve seat 134, so as to bring the channels 142 into communication with the reservoir tank 64 and thus make it easier for the hydraulic oil to flow from the reservoir tank 64 toward the pressure chamber 86 of the clutch master cylinder 62. Consequently, the amount of ineffective pedal travel during depression of the clutch pedal 60 is sufficiently reduced, thus assuring improved operability of the clutch pedal 60. Furthermore, the workability or working efficiency is prevented from deteriorating when the hydraulic oil is charged into the hydraulic clutch device 10 in a vacuum, or air is removed from the hydraulic oil in the clutch device 10.

In the vehicular hydraulic clutch device 10, the clutch master cylinder 62 has the chamber housing 90 provided between the pressure chamber 86 for generating a hydraulic pressure and the attachment tube 100 for connecting the housing 90 to the reservoir tank 64, and the one way restrictor 130 is provided in the chamber housing 90. Thus, the one way restrictor 130 is provided in the chamber housing 90 located at a point relatively closer to the pressure chamber 86 between. the pressure chamber 86 of the clutch master cylinder 62 and the reservoir tank 64. Therefore, the flow of the hydraulic oil from the pressure chamber 86 of the clutch master cylinder 62 toward the reservoir tank 64 is further effectively restricted, resulting in a further reduction in the ineffective pedal travel during depression of the clutch pedal 64 and a further improvement in the operability of the clutch pedal 60.

In the vehicular hydraulic clutch device 10, the clutch slave cylinder 66 includes the output piston 116 that transmits the clutch operating force to the diaphragm spring 50 of the friction clutch 12, and the annular second piston 118 that is provided between the output piston 116 and the pressure chamber 114 at a position adjacent to the output piston 116 such that the second piston 118 can be moved apart from the output piston 116 in the cylinder housing 108. The second piston 118 is operable to transmit thrust force to the output piston 116 when it receives the clutch-operating hydraulic pressure in the pressure chamber 114. With this arrangement, the amount of the hydraulic oil flowing from the pressure chamber 86 of the clutch master cylinder 62 toward the reservoir tank 64 via the communication hole 104 is reduced during the operation of returning or releasing the clutch pedal 60; therefore, the inertia of the hydraulic oil flowing from the clutch slave cylinder 66 to the pressure chamber 86 of the clutch master cylinder 62 is reduced, and a negative pressure is less likely or unlikely to be generated in the pressure chamber 114 of the clutch slave cylinder 66. As a result, the spacing between the output piston 116 and the second piston 118 is prevented from expanding to be larger than a minute clearance necessary and sufficient to prevent or curb transmission of vibrations between the pistons 116, 118. When the clutch pedal 60 is subsequently depressed, the amount of ineffective pedal travel can be reduced, thus assuring improved operability of the clutch pedal 60.

In the vehicular hydraulic clutch device 10, no human operation or work is required to change the cross-sectional area of the channel(s) through which the hydraulic oil flows between the reservoir tank 64 and the pressure chamber 86 of the clutch master cylinder 62, thus assuring improved working efficiency.

Next, other embodiments of the invention will be described. In the following description of the other embodiments, the same reference numerals are assigned to components or parts that are also provided in the first embodiment, and no further explanation of these components or parts will be provided.

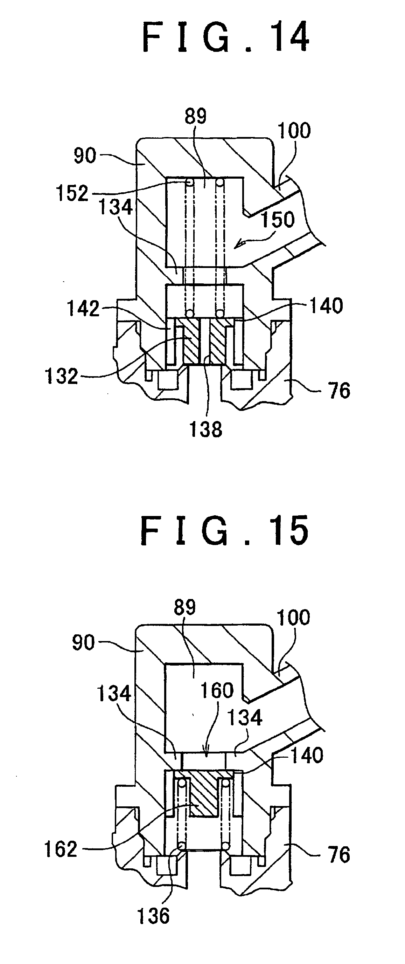

FIG 14 shows a one way restrictor 150 as a flow control device. FIG. 14 corresponds to FIG 5 showing the one way restrictor 130. In the one way restrictor 150 shown in FIG 14, the valve element 132 and the valve seat 134 have substantially the same configurations as those of the one way restrictor 130, but the spring 136 is replaced by a spring 152 that biases the valve element 132 in such a direction as to move the valve element 132 away from the valve seat 134. With this arrangement, when the oil pressure in the pressure chamber 86 of the clutch master cylinder 62 is higher by a specified pressure or greater than the oil pressure in the reservoir tank 64, the valve element 132 moves toward the valve seat 134 when receiving the oil pressure in the pressure chamber 86 of the clutch master cylinder 62, and abuts on the valve seat 134 so that the channels 142 are closed by the valve seat 134. The above-mentioned specified pressure is empirically obtained in advance as a value necessary and sufficient to cause the valve element 132 to abut on the valve seat 134 against the bias force of the spring 152. When the oil pressure in the pressure chamber 86 of the clutch master cylinder 62 is equal to or lower than the oil pressure in the reservoir tank 64, or when the oil pressure in the pressure chamber 86 of the clutch master cylinder 62 is higher than the oil pressure in the reservoir tank 64 by a pressure difference that is smaller than the specified pressure, the valve element 132 is moved away from the valve seat 134, so that the channels 142 are brought into communication with the reservoir tank 64.

In the vehicular hydraulic clutch device 10 provided with the one way restrictor 150, the flow of the hydraulic oil from the pressure chamber 86 of the clutch master cylinder 62 toward the reservoir tank 64 is restricted, whereas the flow of the hydraulic oil from the reservoir tank 64 toward the pressure chamber 86 of the clutch master cylinder 62 is less likely or unlikely to be restricted, namely, the hydraulic oil flows more freely from the reservoir tank 64 to the pressure chamber 86. Thus, as in the example as described above, the amount of ineffective pedal travel during depression of the clutch pedal 60 is sufficiently reduced, thus assuring improved operability of the clutch pedal 60. Furthermore, the workability or working efficiency is prevented from deteriorating when the hydraulic oil is charged into the hydraulic clutch device 10 in a vacuum, or air is removed from the hydraulic oil in the clutch device 10.

FIG. 15 shows a one way restrictor 160 as a flow control device. FIG. 15 corresponds to FIG. 5 showing the one way restrictor 130. As shown in FIG 15, the one way restrictor 160 has substantially the same construction as the one way restrictor 130, except that the valve element 132 is replaced by a valve element 162 in which no restriction hole like the restriction hole 138 is formed. In the one way restrictor 160 thus constructed, when the oil pressure in the pressure chamber 86 of the clutch master cylinder 62 is equal to or higher than the oil pressure in the reservoir tank 64, the valve element 162 abuts on the valve seat 134 so that the plurality of channels 142 are closed by the valve seat 134, and the hydraulic oil is inhibited from flowing from the pressure chamber 86 of the clutch master cylinder 62 to the reservoir tank 64. When the oil pressure in the pressure chamber 86 of the clutch master cylinder 62 is lower than the oil pressure in the reservoir tank 64, the valve element 162 is moved away from the valve seat 134 so that the channels 142 are brought into communication with the reservoir tank 64. In this condition, the flow of the hydraulic oil from the reservoir tank 64 to the pressure chamber 86 of the clutch master cylinder 62 is not impeded.

In the vehicular hydraulic clutch device 10 provided with the one way restrictor 160, the flow of the hydraulic oil from the pressure chamber 86 of the clutch master cylinder 62 toward the reservoir tank 64 is inhibited, whereas the flow of the hydraulic oil from the reservoir tank 64 toward the pressure chamber 86 of the clutch master cylinder 62 is less likely or unlikely to restricted, namely, the hydraulic oil flows more freely from the reservoir tank 64 toward the pressure chamber 86. Thus, as in the above-described exmples, the amount of ineffective pedal travel during depression of the clutch pedal 60 is sufficiently reduced, thus assuring improved operability of the clutch pedal 60. Furthermore, the workability or working efficiency is prevented from deteriorating when the hydraulic oil is charged into the hydraulic clutch device 10 in a vacuum, or air is removed from the hydraulic oil in the clutch device 10.

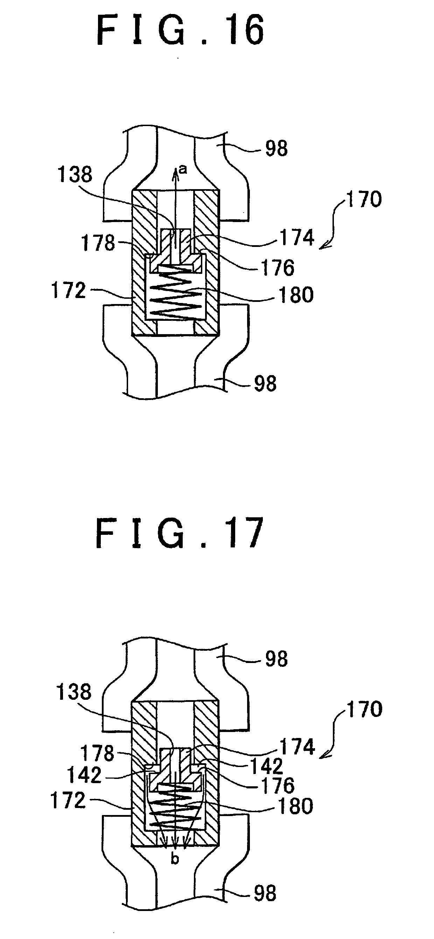

FIG 16 schematically shows a one way restrictor 170 as a flow control device. In FIG. 16, the one way restrictor 170 is disposed at some point in the connecting hose 98 between the pressure chamber 86 of the clutch master cylinder 62 and the reservoir tank 64. The one way restrictor 170 serves as a flow control device that restricts flow of the hydraulic oil from the pressure chamber 86 of the clutch master cylinder 62 toward the reservoir tank 64 when the flow takes place in connection with the operation of the clutch pedal 60. Namely, the one way restrictor 70 is configured to allow the hydraulic oil to flow from the reservoir tank 64 to the pressure chamber 86 of the clutch master cylinder 62, and restrict flow of the hydraulic oil from the pressure chamber 86 of the clutch master cylinder 62 to the reservoir tank 64. More specifically, the one way restrictor 170 includes a cylindrical housing 172, a stepped, cylindrical valve element 17 fitted in the housing 172, a valve seat (seat member) 178 provided by a portion of the housing 172, and a spring 180 that biases the valve element 174 toward the valve seat 178. The housing 172 has one end portion closer to the clutch master cylinder 62 and the other end portion closer to the reservoir tank 64, and a pair of hose parts into which the connecting hose 98 is divided in the longitudinal direction are fitted at their end portions on the peripheries of the above-indicated one end portion and the other end portion of the housing 172. The stepped valve element 174, which includes a large-diameter portion and a small-diameter portion, is fitted in the housing 172 so as to be movable in the axial direction within the housing 172. The valve seat 178 is formed by a radially inner portion of a part of the housing 172 which is located closer to the reservoir tank 64 than the large-diameter portion of the valve element 174 and is formed with a bore having a smaller diameter than that of the large-diameter portion. The valve seat 178 serves to restrict movement of the valve element 174 toward the reservoir tank 64 when an end face 176 of a stepped portion of the valve element 174 abuts on the valve seat 178. In this example, the length of the spring 180 is set so that the bias force applied to the valve element 174 becomes substantially equal to zero when the valve element 174 abuts on the valve seat 178 as shown in FIG 16. The valve element 174 is formed coaxially with a restriction hole 138 having a sufficiently small diameter as compared with the inside diameters of the housing 172, connecting hose 98, attachment pipe 100, and the hydraulic oil supply hole 96. The restriction hole 138 serves to give flow resistance to the hydraulic oil flowing in the oil channel between the pressure chamber 86 of the clutch master cylinder 62 and the reservoir tank 64.

An annular clearance is formed between the outer circumferential surface of the large-diameter portion of the valve element 174 and the inner circumferential surface of the housing 172. When the oil pressure in the pressure chamber 86 of the clutch master cylinder 62 is equal to or higher than the oil pressure in the reservoir tank 64, the valve element 174 receives the oil pressure of the pressure chamber 86 of the clutch master cylinder 62, and is held in a condition in which the valve element 174 abuts on the valve seat 178 as shown in FIG 16. In the condition as shown in FIG. 16, the hydraulic oil directed from the pressure chamber 86 of the clutch master cylinder 62 toward the reservoir tank 64 flows to the reservoir tank 64 through the restriction hole 138 as indicated by arrow "a" in FIG. 16. When the oil pressure in the pressure chamber 86 of the clutch master cylinder 62 is lower than the oil pressure in the reservoir tank 64, the valve element 174 receives the oil pressure of the reservoir tank 64, and is moved away from the valve seat 178 toward the clutch master cylinder 62 as shown in FIG 17. In the condition as shown in FIG 17, the hydraulic oil directed from the reservoir tank 64 toward the pressure chamber 86 of the clutch master cylinder 62 flows to the pressure chamber 86 of the clutch master cylinder 62 through the restriction hole 138, and an annular channel 142 formed between the outer circumferential surface of the large-diameter portion of the valve element 174 and the inner circumferential surface of the housing 172 and between the end face 176 of the stepped portion of the valve element 174 and the valve seat 178. When the oil pressure in the pressure chamber 86 of the clutch master cylinder 62 is equal to or higher than the oil pressure in the reservoir tank 64, the one way restrictor 170 of this embodiment provides a relatively small cross-sectional area of the channel, by closing the channel 142 through abutting contact between the end face 176 of the stepped portion of the valve element 174 and the valve seat 178. When the oil pressure in the pressure chamber 86 of the clutch master cylinder 62 is lower than the oil pressure in the reservoir tank 64, the channel 142 is brought into communication with the reservoir tank 64 and the pressure chamber 86 of the clutch master cylinder 62, so that the one way restrictor 170 provides a relatively large cross-sectional area of the channel. In the vehicular hydraulic clutch device 10 provided with the thus constructed one way restrictor 170, the resistance to the flow of the hydraulic fluid from the pressure chamber 86 of the clutch master cylinder 62 to the reservoir tank 64 is made larger than the resistance to the flow of the hydraulic fluid from the reservoir tank 64 to the pressure chamber 86 of the clutch master cylinder 62.

In the vehicular hydraulic clutch device 10 provided with the one way restrictor 170, the flow of the hydraulic oil from the pressure chamber 86 of the clutch master cylinder 62 toward the reservoir tank 64 is restricted, whereas the flow of the hydraulic oil from the reservoir tank 64 toward the pressure chamber 86 of the clutch master cylinder 62 is less likely or unlikely to be restricted, namely, the hydraulic oil flows more freely from the reservoir tank 64 toward the pressure chamber 86. Thus, as in the above-described examples, the amount of ineffective pedal travel during depression of the clutch pedal 60 is sufficiently reduced, thus assuring improved operability of the clutch pedal 60. Furthermore, the workability or working efficiency is prevented from deteriorating when the hydraulic oil is charged into the hydraulic clutch device 10 in a vacuum, or air is removed from the hydraulic oil in the clutch device 10. Also, the hydraulic clutch device 10 can be manufactured at low cost, since a conventional clutch master cylinder can be used as it is, and the clutch device 10 has a simple arrangement or configuration that leads to excellent manufacturability.

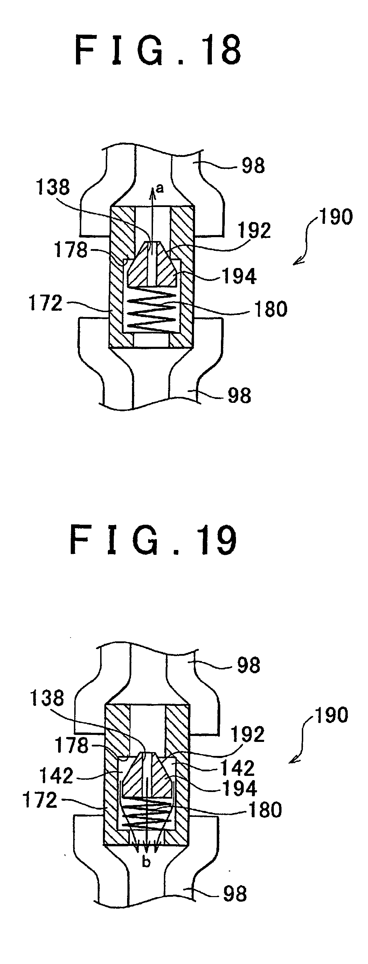

FIG 18 schematically shows a one way restrictor 190 as a flow control device. In FIG. 18, the one way restrictor 190 is disposed at some point in the connecting hose 98 between the pressure chamber 86 of the clutch master cylinder 62 and the reservoir tank 64. The one way restrictor 190 is different from the one way restrictor 170 in that the restrictor 190 includes a cylindrical valve element 194 in place of the valve element 174. The valve element 194 is fitted in the housing 172 so as to be movable in the axial direction within the housing 172, and has a tapered face 192 that is formed such that the outside diameter of one end portion of the valve element 194 closer to the clutch master cylinder 62 is larger than the diameter of a bore formed at the valve seat 178 in the housing 172, and the outside diameter of the valve element 194 decreases from the above-indicated one end portion to the other end closer to the reservoir tank 64. The valve element 194 is biased by the spring 180 toward the valve seat 178, and its movement in a direction approaching the reservoir tank 64 is limited when the tapered face 192 of the valve element 194 abuts on the valve seat 178. The valve element 194 has a restriction hole 138 formed concentrically with the axis thereof and having a sufficiently small diameter as compared with the respective inside diameters of the housing 172, connecting hose 98, attachment tube 100 and the hydraulic oil supply hole 96. The restriction hole 138 serves to give flow resistance to the hydraulic oil flowing in the oil channel between the pressure chamber 86 of the clutch master cylinder 62 and the reservoir tank 64.

An annular clearance is formed between the outer circumferential surface of the large-diameter portion of the valve element 194 and the inner circumferential surface of the housing 172. When the oil pressure in the pressure chamber 86 of the clutch master cylinder 62 is equal to or higher than the oil pressure in the reservoir tank 64, the valve element 194 receives the oil pressure of the pressure chamber 86 of the clutch master cylinder 62, and is held in a condition in which the valve element 194 abuts on the valve seat 178 as shown in FIG. 18. In the condition as shown in FIG. 18, the hydraulic oil directed from the pressure chamber 86 of the clutch master cylinder 62 toward the reservoir tank 64 flows to the reservoir tank 64 through the restriction hole 138 as indicated by arrow "a" in FIG. 18. When the oil pressure in the pressure chamber 86 of the clutch master cylinder 62 is lower than the oil pressure in the reservoir tank 64, the valve element 194 receives the oil pressure of the reservoir tank 64, and is moved away from the valve seat 178 in a direction approaching the clutch master cylinder 62 as shown in FIG. 19. In the condition as shown in FIG 19, the hydraulic oil directed from the reservoir tank 64 toward the pressure chamber 86 of the clutch master cylinder 62 flows to the clutch master cylinder 62 through the restriction hole 138, and an annular channel 142 formed between the outer circumferential surface of the large-diameter portion of the valve element 194 and the inner circumferential surface of the housing 172 and between the tapered face 192 and the valve seat 178. When the oil pressure in the pressure chamber 86 of the clutch master cylinder 62 is equal to or higher than the oil pressure in the reservoir tank 64, the one way restrictor 190 provides a relatively small cross-sectional area of the channel, by closing the channel 142 through abutting contact between the tapered face 192 of the valve element 194 and the valve seat 178. When the oil pressure in the pressure chamber 86 of the clutch master cylinder 62 is lower than the oil pressure in the reservoir tank 64, the channel 142 is brought into communication with the reservoir tank 64 and the pressure chamber 86 of the clutch master cylinder 62, so that the one way restrictor 190 provides a relatively large cross-sectional area of the channel. In the vehicular hydraulic clutch device 10 provided with the thus constructed one way restrictor 190, the resistance to the flow of the hydraulic fluid from the pressure chamber 86 of the clutch master cylinder 62 to the reservoir tank 64 is made larger than the resistance to the flow of the hydraulic fluid from the reservoir tank 64 to the pressure chamber 86 of the clutch master cylinder 62.

In the vehicular hydraulic clutch device 10 provided with the one way restrictor 190, the flow of the hydraulic oil from the pressure chamber 86 of the clutch master cylinder 62 toward the reservoir tank 64 is restricted, whereas the flow of the hydraulic oil from the reservoir tank 64 toward the pressure chamber 86 of the clutch master cylinder 62 is less likely or unlikely to be restricted, namely, the hydraulic oil flows more freely from the reservoir tank 64 toward the pressure chamber 86. Thus, as in the above-described examples, the amount of ineffective pedal travel during depression of the clutch pedal 60 is sufficiently reduced, thus assuring improved operability of the clutch pedal 60. Furthermore, the workability or working efficiency is prevented from deteriorating when the hydraulic oil is charged into the hydraulic clutch device 10 in a vacuum, or air is removed from the hydraulic oil in the clutch device 10. Also, the hydraulic clutch device 10 can be manufactured at low cost, since a conventional clutch master cylinder can be used as it is, and the clutch device 10 has a simple arrangement or configuration that leads to excellent manufacturability.

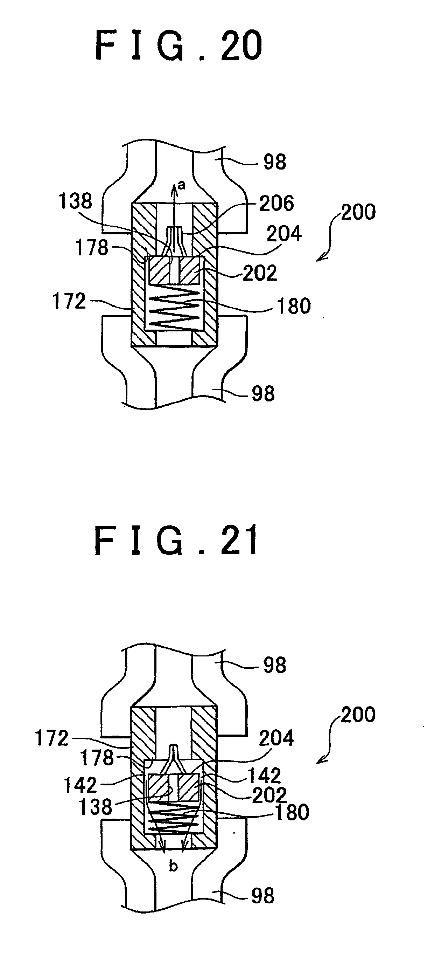

FIG 20 schematically shows a one way restrictor 200 as a flow control device. In FIG. 20, the one way restrictor 200 is disposed at some point in the connecting hose 98 between the pressure chamber 86 of the clutch master cylinder 62 and the reservoir tank 64. The one way restrictor 200 is different from the one way restrictor 170 in that the restrictor 200 includes a cylindrical valve element 202 in place of the valve element 174. The valve element 202 is fitted in the housing 172 so as to be movable in the axial direction within the housing 172, and has an outside diameter that is larger than the diameter of a bore formed at the valve seat 178 in the housing 172. The valve element 202 is biased by the spring 180 toward the valve seat 178, and its movement in a direction approaching the reservoir tank 64 is limited when an end face 204 of the valve element 202 closer to the reservoir tank 64 abuts on the valve seat 178. The valve element 202 has a restriction hole 138 formed concentrically with the axis thereof and having a sufficiently small diameter as compared with the respective inside diameters of the housing 172, connecting hose 98, attachment tube 100 and the hydraulic oil supply hole 96. The restriction hole 138 serves to give flow resistance to the hydraulic oil flowing in the oil channel between the pressure chamber 86 of the clutch master cylinder 62 and the reservoir tank 64. The valve element 202 is also provided with a hollow, conical elastic valve 206 having a proximal end portion fixed to a radially inner portion of the end face 204 of the valve element 202 and a distal end portion that protrudes from the proximal end portion toward the reservoir tank 64. The elastic valve 206 is formed of an elastic material, such as rubber. When the oil pressure in the pressure chamber 86 of the clutch master cylinder 62 is equal to or higher than the oil pressure in the reservoir tank 64, the size of an opening formed in the distal end portion of the elastic valve 206 increases to be about the same size or diameter of the restriction hole 138, as shown in FIG 20. When the oil pressure in the pressure chamber 86 of the clutch master cylinder 62 is smaller than the oil pressure in the reservoir tank 64, the opening in the distal end portion of the elastic valve 206 is closed, as shown in FIG 21.

An annular clearance is formed between the outer circumferential surface of the valve element 202 and the inner circumferential surface of the housing 172. When the oil pressure in the pressure chamber 86 of the clutch master cylinder 62 is equal to or higher than the oil pressure in the reservoir tank 64, the valve element 202 receives the oil pressure of the pressure chamber 86 of the clutch master cylinder 62, and is thus held in a condition in which the valve element 202 abuts on the valve seat 178 as shown in FIG 20. In the condition as shown in FIG 20, the hydraulic oil directed from the pressure chamber 86 of the clutch master cylinder 62 toward the reservoir tank 64 flows to the reservoir tank 64 through the restriction hole 138 and the elastic valve 206 as indicated by arrow "a" in FIG. 20. When the oil pressure in the pressure chamber 86 of the clutch master cylinder 62 is lower than the oil pressure in the reservoir tank 64, the valve element 202 receives the oil pressure of the reservoir tank 64, and is moved away from the valve seat 178 in a direction approaching the clutch master cylinder 62 as shown in FIG. 21. In the condition as shown in FIG. 21, the hydraulic oil directed from the reservoir tank 64 toward the pressure chamber 86 of the clutch master cylinder 62 flows to the pressure chamber 86 of the clutch master cylinder 62 through an annular channel 142 formed between the outer circumferential surface of the valve element 202 and the inner circumferential surface of the housing 172 and between the end face 204 of the valve element 202 and the valve seat 178. When the oil pressure in the pressure chamber 86 of the clutch master cylinder 62 is equal to or higher than the oil pressure in the reservoir tank 64, the one way restrictor 200 provides a relatively small cross-sectional area of the channel, by closing the channel 142 through abutting contact between the end face 204 of the valve element 202 and the valve seat 178 of the housing 172. When the oil pressure in the pressure chamber 86 of the clutch master cylinder 62 is lower than the oil pressure in the reservoir tank 64, the channel 142 is brought into communication with the reservoir tank 64 and the pressure chamber 86 of the clutch master cylinder 62, so that the one way restrictor 200 provides a relatively large cross-sectional area of the channel. In the vehicular hydraulic clutch device 10 of the sixth embodiment provided with the thus constructed one way restrictor 200, the resistance to the flow of the hydraulic fluid from the pressure chamber 86 of the clutch master cylinder 62 to the reservoir tank 64 is made larger than the resistance to the flow of the hydraulic fluid from the reservoir tank 64 to the pressure chamber 86 of the clutch master cylinder 62.

In the vehicular hydraulic clutch device 10 provided with the one way restrictor 200, the flow of the hydraulic oil from the pressure chamber 86 of the clutch master cylinder 62 toward the reservoir tank 64 is restricted, whereas the flow of the hydraulic oil from the reservoir tank 64 toward the pressure chamber 86 of the clutch master cylinder 62 is less likely or unlikely to be restricted, namely, the hydraulic oil flows more freely from the reservoir tank 64 toward the pressure chamber 86. Thus, as in the above-described examples, the amount of ineffective pedal travel during depression of the clutch pedal 60 is sufficiently reduced, thus assuring improved operability of the clutch pedal 60. Furthermore, the workability or working efficiency is prevented from deteriorating when the hydraulic oil is charged into the hydraulic clutch device 10 in a vacuum, or air is removed from the hydraulic oil in the clutch device 10. Also, the hydraulic clutch device 10 can be manufactured at low cost, since a conventional clutch master cylinder can be used as it is, and the clutch device 10 has a simple arrangement or configuration that leads to excellent manufacturability.

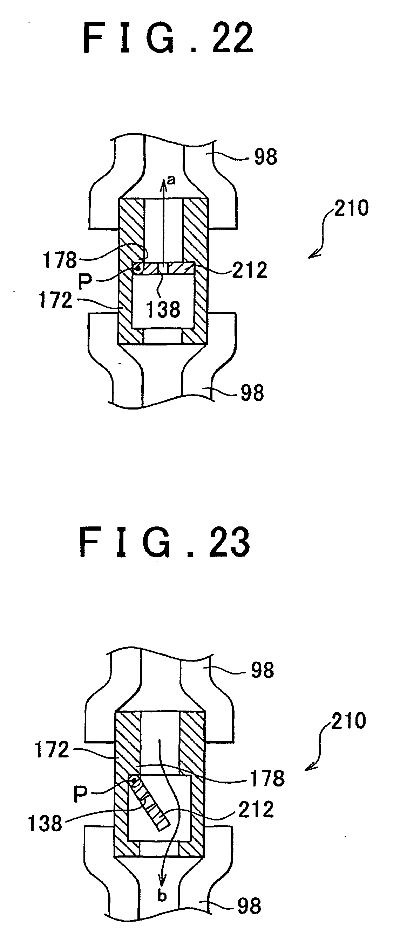

FIG 22 schematically shows a one way restrictor 210 as a flow control device. In FIG. 22, the one way restrictor 210 is disposed at some point in the connecting hose 98 between the pressure chamber 86 of the clutch master cylinder 62 and the reservoir tank 64. The one way restrictor 210 is different from the one way restrictor 170 in that the restrictor 210 includes a disc-shaped valve element 212 in place of the valve element 174. The valve element 212 has an outside diameter that is larger than the diameter of a bore formed at the location of the valve seat 178 in the housing 172, and a circumferential portion of the outer edge of the valve element 212 is placed on an end face of a stepped portion of the housing 172 closer to the reservoir tank 64, such that the valve element 212 is rotatable or pivotable about axis P generally perpendicular to the axis of the housing 172. The valve element 212 has a restriction hole 138 formed concentrically with the axis thereof and having a sufficiently small diameter as compared with the respective inside diameters of the housing 172, connecting hose 98, attachment tube 100 and the hydraulic oil supply hole 96. The restriction hole 138 serves to give flow resistance to the hydraulic oil flowing in the oil channel between the pressure chamber 86 of the clutch master cylinder 62 and the reservoir tank 64.

When the oil pressure in the pressure chamber 86 of the clutch master cylinder 62 is equal to or higher than the oil pressure in the reservoir tank 64, the valve element 212 receives the oil pressure of the pressure chamber 86 of the clutch master cylinder 62, and is thus held in a condition in which the valve element 212 abuts on the valve seat 178 as shown in FIG 22, namely, in a condition in which the bore formed in the housing 172 is closed by the valve element 212. In the condition as shown in FIG 22, the hydraulic oil directed from the pressure chamber 86 of the clutch master cylinder 62 toward the reservoir tank 64 flows to the reservoir tank 64 through the restriction hole 138 as indicated by arrow "a" in FIG 22. When the oil pressure in the pressure chamber 86 of the clutch master cylinder 62 is lower than the oil pressure in the reservoir tank 64, the valve element 212 receives the oil pressure of the reservoir tank 64, and is moved away from the valve seat 178 in a direction approaching the clutch master cylinder 62 as shown in FIG. 23. In the condition as shown in FIG 23, the hydraulic oil directed from the reservoir tank 64 toward the pressure chamber 86 of the clutch master cylinder 62 flows to the pressure chamber 86 of the clutch master cylinder 62 through a spacing between the valve element 212 and the inner circumferential surface of the housing 172, as indicated by arrow "b" in FIG. 23. When the oil pressure in the pressure chamber 86 of the clutch master cylinder 62 is equal to or higher than the oil pressure in the reservoir tank 64, the one way restrictor 210 of the seventh embodiment provides a relatively small cross-sectional area of the channel, by closing the bore of the housing 172 through abutting contact between the valve element 212 and the valve seat 178. When the oil pressure in the pressure chamber 86 of the clutch master cylinder 62 is lower than the oil pressure in the reservoir tank 64, the one way restrictor 210 provides a relatively large cross-sectional area of the channel by placing the valve element 212 in an open state or position. In the vehicular hydraulic clutch device 10 provided with the thus constructed one way restrictor 210, the resistance to the flow of the hydraulic fluid from the pressure chamber 86 of the clutch master cylinder 62 to the reservoir tank 64 is made larger than the resistance to the flow of the hydraulic fluid from the reservoir tank 64 to the pressure chamber 86 of the clutch master cylinder 62.

In the vehicular hydraulic clutch device 10 provided with the one way restrictor 210, the flow of the hydraulic oil from the pressure chamber 86 of the clutch master cylinder 62 toward the reservoir tank 64 is restricted, whereas the flow of the hydraulic oil from the reservoir tank 64 toward the pressure chamber 86 of the clutch master cylinder 62 is less likely or unlikely to be restricted, namely, the hydraulic oil flows more freely from the reservoir tank 64 toward the pressure chamber 86. Thus, as in the above-described embodiments, the amount of ineffective pedal travel during depression of the clutch pedal 60 is sufficiently reduced, thus assuring improved operability of the clutch pedal 60. Furthermore, the workability or working efficiency is prevented from deteriorating when the hydraulic oil is charged into the hydraulic clutch device 10 in a vacuum, or air is removed from the hydraulic oil in the clutch device 10. Also, the hydraulic clutch device 10 can be manufactured at low cost, since a conventional clutch master cylinder can be used as it is, and the clutch device 10 has a simple arrangement or configuration that leads to excellent manufacturability.

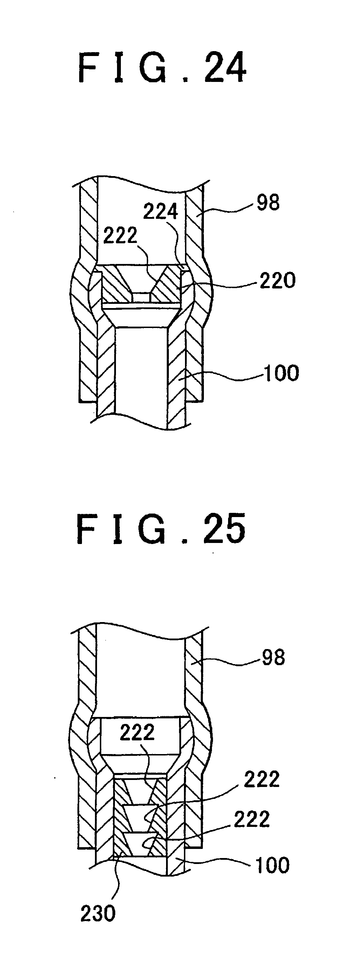

FIG 24 schematically shows a restriction member 220 as a flow control device provided in an embodiment of the invention. In FIG. 24, the restriction member 220 serves to restrict flow of the hydraulic oil from the pressure chamber 86 of the clutch master cylinder 62 toward the reservoir tank 64 when the flow takes place in connection with the operation of the clutch pedal 60. More specifically, the restriction member 220 is a cylindrical member that is fitted in an opening of a distal end portion of the attachment tube 100 provided in the clutch master cylinder 62 for connection with the reservoir tank 64. The restriction member 220 has a tapered, restriction hole (tapered hole) 222 formed such that the diameter of the restriction hole 222 increases from one axial end thereof closer to the pressure chamber 86 of the clutch master cylinder 62 to the other axial end closer to the reservoir tank 64, and a flange 22 having an outside diameter that is larger than the diameter of the opening in the distal end portion of the attachment tube 100 and is equal to or smaller than the outside diameter of an end face of the attachment tube 100. The restriction member 220 is formed of a material, such as synthetic resin or synthetic rubber, using an injection molding die, for example. The restriction hole 222 serves to give flow resistance to the hydraulic oil flowing in the oil channel that communicates with the pressure chamber 86 of the clutch master cylinder 62 and the reservoir tank 64.

The vehicular hydraulic clutch device 10 provided with the restriction member 220 of the embodiment has the restriction hole 222 that provides flow resistance to the hydraulic oil flowing in the oil channel that communicates with the pressure chamber 86 of the clutch master cylinder 62 and the reservoir tank 64. Therefore, the amount of the hydraulic oil flowing from the pressure chamber 86 of the clutch master cylinder 62 to the reservoir tank 64 in connection with the operation of the clutch pedal 60 is reduced, as compared with the case where no restriction hole is provided in the oil channel. When the clutch pedal 60 is subsequently depressed, therefore, the amount of ineffective pedal travel that does not contribute to generation of hydraulic pressures in the pressure chamber 86 of the clutch master cylinder 62 and in the pressure chamber 114 of the clutch slave cylinder 66 can be reduced, thus assuring improved operability of the clutch pedal 60.

In the vehicular hydraulic clutch device 10 of this embodiment, the restriction member 220 is fitted in the opening of the attachment tube 100 provided in the clutch master cylinder 62 for connection with the reservoir tank 64, and has the tapered restriction hole 222 that is formed such that the cross-sectional area of the channel increases from one axial end of the restriction member 220 closer to the clutch master cylinder 62 to the other axial end closer to the reservoir tank 64. With this arrangement, the flow of the hydraulic oil from the pressure chamber 86 of the clutch master cylinder 62 toward the reservoir tank 64 is restricted, whereas the flow of the hydraulic oil from the reservoir tank 64 toward the pressure chamber 86 of the clutch master cylinder 62 is less likely or unlikely to be restricted, namely, the hydraulic oil flows more freely from the reservoir tank 64 toward the pressure chamber 86. Thus, as in the above-described embodiments, the amount of ineffective pedal travel during depression of the clutch pedal 60 is sufficiently reduced, thus assuring improved operability of the clutch pedal 60. Furthermore, the workability or working efficiency is prevented from deteriorating when the hydraulic oil is charged into the hydraulic clutch device 10 in a vacuum, or air is removed from the hydraulic oil in the clutch device 10. Also, the hydraulic clutch device 10 of this embodiment can be manufactured at low cost, since a conventional clutch master cylinder can be used as it is, and the clutch device 10 has a simple arrangement or configuration that leads to excellent manufacturability.

FIG 25 schematically shows a restriction member 230 as a flow control device. In FIG 25, the restriction member 230, which is fitted in the attachment tube 100 of the clutch master cylinder 62, includes a plurality of restriction holes 222 arranged contiguously in the direction of flow of the hydraulic oil, and has an outside diameter substantially equal to the inside diameter of the attachment tube 100. The restriction member 230 is formed of a material, such as synthetic resin or synthetic rubber, using an injection molding die, for example. In the vehicular hydraulic clutch device 10 provided with the restriction member 230, the resistance to the flow of the hydraulic oil from the pressure chamber 86 of the clutch master cylinder 62 to the reservoir tank 64 is made larger than the resistance to the flow of the hydraulic oil from the reservoir tank 64 to the pressure chamber 86 of the clutch master cylinder 62.

In the vehicular hydraulic clutch device 10 provided with the restriction member 230, as in the embodiment as described above, the flow of the hydraulic oil from the pressure chamber 86 of the clutch master cylinder 62 toward the reservoir tank 64 is restricted, whereas the flow of the hydraulic oil from the reservoir tank 64 toward the pressure chamber 86 of the clutch master cylinder 62 is less likely or unlikely to be restricted, namely, the hydraulic oil flows more freely from the reservoir tank 64 toward the pressure chamber 86. Thus, the hydraulic clutch device 10 yields substantially the same effects as those provided in the above embodiment.

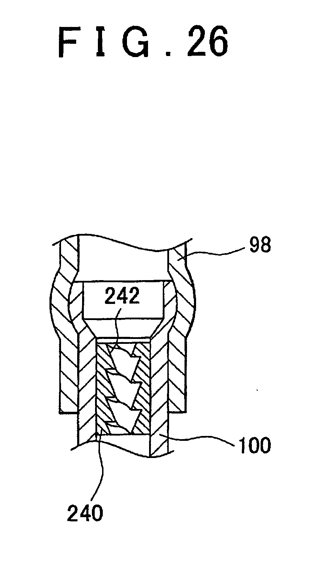

FIG 26 schematically shows a restriction member 240 as a flow control device. In FIG 26, the restriction member 240 includes a restriction hole 242 having sawtooth female threads formed on the inner circumferential surface of the restriction member 240 to be arranged in a helical fashion from one axial end of the restriction member 240 closer to the clutch master cylinder 62 to the other axial end closer to the reservoir tank 64. The restriction member 242, which has an outside diameter substantially equal to the inside diameter of the attachment tube 100 of the clutch master cylinder 62, is fitted and mounted in the attachment tube 100. The restriction member 240 is formed of a material, such as synthetic resin or synthetic rubber, using an injection molding die, for example. In the vehicular hydraulic clutch device 10 provided with the restriction member 240, the resistance to the flow of the hydraulic oil from the pressure chamber 86 of the clutch master cylinder 62 to the reservoir tank 64 is made larger than the resistance to the flow of the hydraulic oil from the reservoir tank 64 to the pressure chamber 86 of the clutch master cylinder 62.

In the vehicular hydraulic clutch device 10 provided with the restriction member 240, the flow of the hydraulic oil from the pressure chamber 86 of the clutch master cylinder 62 toward the reservoir tank 64 is restricted, whereas the flow of the hydraulic oil from the reservoir tank 64 toward the pressure chamber 86 of the clutch master cylinder 62 is less likely or unlikely to be restricted, namely, the hydraulic oil flows more freely from the reservoir tank 64 toward the pressure chamber 86, as in the embodiment as described above. Thus, the hydraulic clutch device 10 of the above example yields substantially the same effects as those provided in the above embodiment.

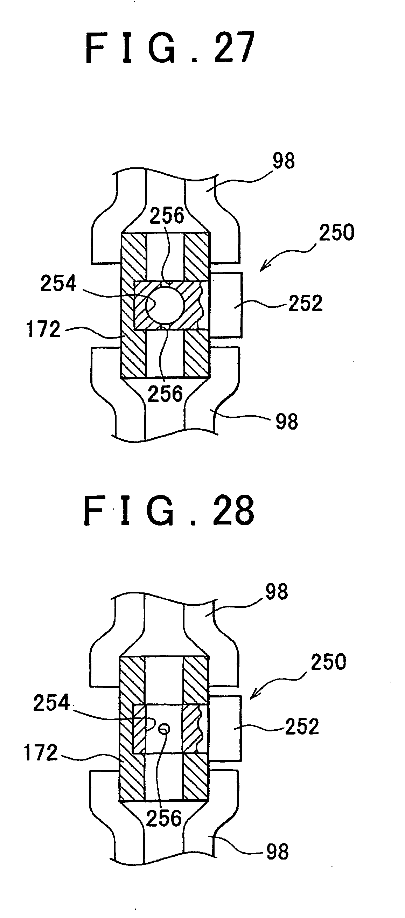

FIG. 27 is a vertical cross-sectional view schematically showing a restriction control valve 250 as a flow control device. In FIG. 27, the restriction control valve 250 is disposed at some point in the connecting hose 98 between the pressure chamber 86 of the clutch master cylinder 62 and the reservoir tank 64. The restriction control valve 250 has a variable restriction member 252 capable of changing the cross-sectional area of the channel of the hydraulic oil flowing in the oil path that communicates the pressure chamber 86 of the clutch master cylinder 62 with the reservoir tank 64, and is arranged to set the amount of flow of the hydraulic oil by changing the position of the variable restriction member 252. More specifically, the restriction control valve 250 includes the variable restriction member 252 having a stepped cylindrical shape, namely, having a large-diameter portion that provides a knob, and a small-diameter distal portion having a smaller diameter than the knob portion. The small-diameter portion of the variable restriction member 252 is inserted in the housing 172 in a direction perpendicular to the axis of the housing 172 so as to extend through a bore formed in the housing 172. The small-diameter portion of the variable restriction member 252 has a through-hole 254 having a diameter equivalent to the inside diameter of the connecting hose 98 and extending in a direction perpendicular to the axis of the small-diameter portion, and restriction holes 256 having a sufficiently small diameter as compared with those of the through-hole 254 and the hydraulic oil supply hole 96 and extending in a direction perpendicular to the axis of the through-hole 254. The restriction holes 256 give flow resistance to the hydraulic oil flowing in the oil path between the pressure chamber 86 of the clutch master cylinder 62 and the reservoir tank 64.

In the restriction control valve 250 constructed as described above, when the variable restriction member 252 is operated so that the axes of the housing 172 and the restriction holes 256 become parallel as shown in FIG 27, the cross-sectional area of the channel of the hydraulic oil directed from the pressure chamber 86 of the clutch master cylinder 62 toward the reservoir tank 64 is reduced, and the flow of the hydraulic fluid is restricted. When the variable restriction member 252 is operated so that the axes of the housing 172 and the through-hole 254 become parallel as shown in FIG. 28, the cross-sectional area of the channel of the hydraulic fluid directed from the pressure chamber 86 of the clutch master cylinder 62 toward the reservoir tank 64 is increased, and the flow of the hydraulic fluid is not restricted. The restriction control valve 250 serves as an adjustment mechanism for changing the cross-sectional area of the channel.

The vehicular hydraulic clutch device 10 provided with the restriction control valve 250 has the variable restriction member 252 capable of changing the cross-sectional area of the channel of the hydraulic fluid flowing in the oil path that communicates the pressure chamber 86 of the clutch master cylinder 62 with the reservoir tank 64, and the amount of the hydraulic oil flowing in the oil path is set as desired by changing the position of the variable restriction member 252. Therefore, during running of the vehicle, the cross-sectional area of the channel is reduced so that the flow of the hydraulic fluid directed from the pressure chamber 86 of the clutch master cylinder 62 toward the reservoir tank 64 is restricted. Also, when the hydraulic oil is charged into the hydraulic clutch device 10 in a vacuum, or air is removed from the hydraulic oil in the clutch device 10, for example, the cross-sectional area of the channel is increased so that the hydraulic oil is allowed to flow in a non-restricted way from the reservoir tank 64 to the pressure chamber 86 of the clutch master cylinder 62. Thus, as in the above-described examples, the workability or working efficiency is prevented from deteriorating when the hydraulic oil is charged into the hydraulic clutch device 10 in a vacuum, or air is removed from the hydraulic oil, while the amount of ineffective pedal travel during depression of the clutch pedal 60 is sufficiently reduced, thus assuring improved operability of the clutch pedal 60.

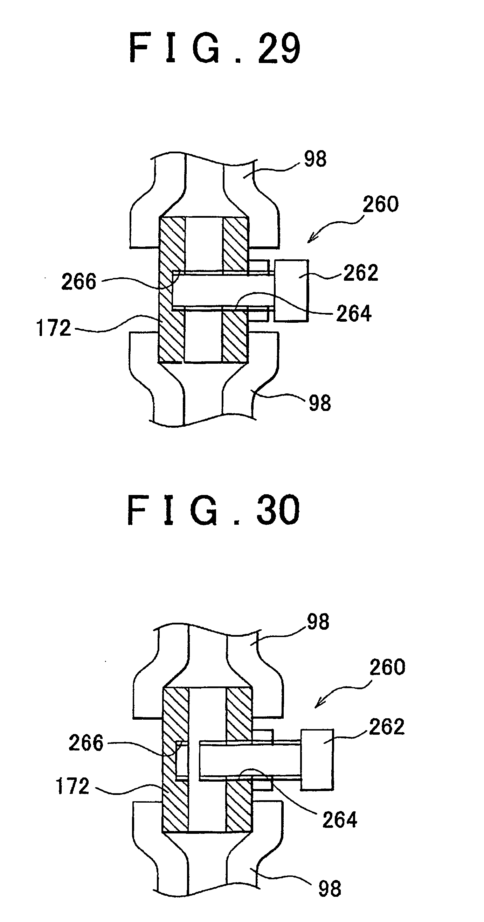

FIG 29 is a vertical cross-sectional view schematically showing a restriction control valve 260 as a flow control device. In FIG. 29, the restriction control valve 260 has a variable restriction member 262 capable of continuously changing the cross-sectional area of the channel of the hydraulic oil flowing in the oil path that communicates the pressure chamber 86 of the clutch master cylinder 62 with the reservoir tank 64, and is arranged to continuously set the amount of flow of the hydraulic oil by changing the position of the variable restriction member 262. More specifically, the restriction control valve 260 includes the variable restriction member 262 having a stepped cylindrical shape, namely, having a large-diameter portion that provides a knob, and a small-diameter threaded portion that has a smaller diameter than the knob portion and is formed at its periphery with threads. The small-diameter threaded portion of the variable restriction member 262 is screwed into screw hole 264 and screw hole 266 formed in the housing 172 in a direction perpendicular to the axis of the housing 172, so as to be inserted and fixed in the housing 172.

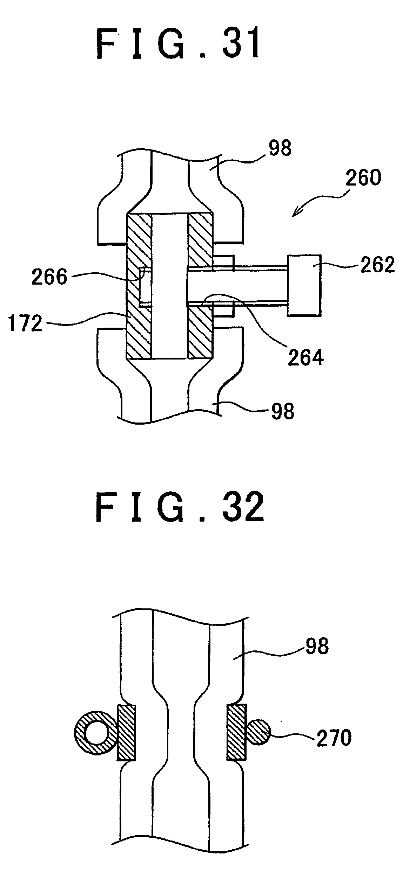

In the restriction control valve 260 constructed as described above, if the variable restriction member 262 is operated so that the bore formed in housing 172 is completely blocked or closed by the variable restriction member 262 as shown in FIG 29, or so that the cross-sectional area of the channel in the housing 172 becomes sufficiently small as compared with the inside diameters of the connecting hose 98 and the hydraulic oil supply hole 96, for example, as shown in FIG. 30, the flow of the hydraulic oil from the pressure chamber 86 of the clutch master cylinder 62 toward the reservoir tank 64 is inhibited or restricted. If the variable restriction member 262 is operated so that the cross-sectional area of the channel in the housing 172 becomes sufficiently larger than or substantially equal to the inside diameters of the connecting hose 98 and the hydraulic oil supply hole 96, for example, as shown in FIG 31, the flow of the hydraulic oil from the pressure chamber 86 of the clutch master cylinder 62 toward the reservoir tank 64 is not restricted. The restriction control valve 260 serves as an adjustment mechanism for continuously changing the cross-sectional area of the channel.

The vehicular hydraulic clutch device 10 provided with the restriction control valve 260 has the variable restriction member 262 capable of continuously changing the cross-sectional area of the channel of the hydraulic fluid flowing in the oil path communicating with the pressure chamber 86 of the clutch master cylinder 62 and the reservoir tank 64, and the amount of the hydraulic oil flowing in the oil path is continuously set to a desired value by changing the position of the variable restriction member 262. With this arrangement, during running of the vehicle, the cross-sectional area of the channel is reduced so that the flow of the hydraulic fluid from the pressure chamber 86 of the clutch master cylinder 62 toward the reservoir tank 64 is restricted. Also, when the hydraulic oil is charged into the hydraulic clutch device 10 in a vacuum, or air is removed from the hydraulic oil in the clutch device 10, the cross-sectional area of the channel is increased so that the hydraulic oil is allowed to flow in a non-restricted way from the reservoir tank 64 to the pressure chamber 86 of the clutch master cylinder 62. Thus, as in the above-described examples, the workability or working efficiency is prevented from deteriorating when the hydraulic oil is charged into the hydraulic clutch device 10 in a vacuum, or air is removed from the hydraulic oil, while the amount of ineffective pedal travel during depression of the clutch pedal 60 is sufficiently reduced, thus assuring improved operability of the clutch pedal 60.

FIG 32 is a vertical cross-sectional view schematically showing a hose band 270 as a flow control device. In FIG 32, the hose band 270 serves as a pressing member for pressing the connecting hose (elastic tube) 98 for connecting the pressure chamber 86 of the clutch master cylinder 62 with the reservoir tank 64, from the outside toward the inside of the hose 98 in the radial direction, so as to change the cross-sectional area of the channel in the connecting hose 98. In a condition where the hose band 270 is attached to the connecting hose 98 as shown in FIG 32, the cross-sectional area of the channel of the connecting hose 98 is reduced, and the flow of the hydraulic oil from the pressure chamber 86 of the clutch master cylinder 62 toward the reservoir tank 64 is restricted. In a condition where the hose band 270 is detached from the connecting hose 98, the cross-sectional area of the channel of the connecting hose 98 is increased, and the flow of the hydraulic oil from the pressure chamber 86 of the clutch master cylinder 62 toward the reservoir tank 64 is not restricted.

The vehicular hydraulic clutch device 10 includes the hose band (pressing member) 270 for pressing the connecting hose 98 provided for communicating the pressure chamber 86 of the clutch master cylinder 62 with the reservoir tank 64, from the outside of the hose 98, so as to change the cross-sectional area of the channel of the connecting hose 98. With this arrangement, during running of the vehicle, the cross-sectional area of the channel is reduced so that the flow of the hydraulic oil from the pressure chamber 86 of the clutch master cylinder 62 to the reservoir tank 64 is restricted. Also, when the hydraulic oil is charged into the hydraulic clutch device 10 in a vacuum, or air is removed from the hydraulic oil in the clutch device 10, for example, the cross-sectional area of the channel is increased so that the hydraulic oil is allowed to flow in a non-restricted way from the reservoir tank 64 to the pressure chamber 86 of the clutch master cylinder 62. Thus, as in the above-described examples, the workability or working efficiency is prevented from deteriorating when the hydraulic oil is charged into the hydraulic clutch device 10 in a vacuum, or air is removed from the hydraulic oil, while the amount of ineffective pedal travel during depression of the clutch pedal 60 is sufficiently reduced, thus assuring improved operability of the clutch pedal 60. Furthermore, the hydraulic clutch device 10 can be manufactured at low cost, since a conventional clutch master cylinder can be used as it is, and the clutch device 10 of this embodiment has a simple arrangement or configuration that leads to excellent manufacturability.

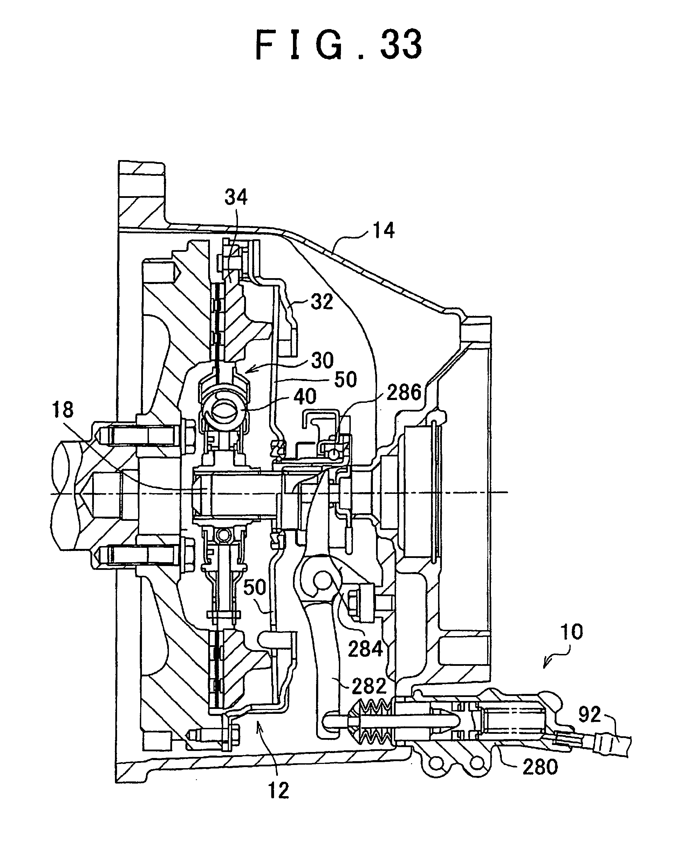

FIG. 33, which corresponds to FIG. 1 showing the embodiment, is a cross-sectional view showing a part of the construction of a vehicular hydraulic clutch device 10 according to a further embodiment of the invention. In FIG. 33, the hydraulic clutch device 10 of the embodiment is constructed similarly to that of the first embodiment, except that a clutch cylinder 280, clutch fork 282, clutch fork support 284 and a release bearing 286, which are well known in the art, are provided in place of the clutch slave cylinder 66. The friction clutch 12 of this embodiment is arranged to be brought into a release state when the inner edge of the diaphragm spring 50 is moved away from the engine, namely, moved away from the clutch disc 30. In this type of hydraulic clutch device 10, when a clutch-operating hydraulic pressure is supplied from the pressure chamber 86 of the clutch master cylinder 62 to the clutch cylinder 280 via the connecting hose 92, the thrust force of the clutch cylinder 280 is transmitted to one end portion of the clutch fork 282. Then, the other end portion of the clutch fork 282 is actuated according to the clutch-operating hydraulic pressure so as to move the inner edge of the diaphragm spring 50 away from the engine, or away from the clutch disc 30, via the release bearing 286, so that the friction clutch 12 is brought into the release state.

The vehicular hydraulic clutch device 10 of this embodiment is identical with that of the above-described embodiment except for the above arrangement. Thus, the hydraulic clutch device 10 of this embodiment includes the one way restrictor (flow control device) 130 that restricts flow of the hydraulic fluid from the pressure chamber 86 of the clutch master cylinder 62 toward the reservoir tank 64 when the flow takes place in connection with the operation of the clutch pedal 60. Therefore, the amount of the hydraulic oil flowing from the pressure chamber 86 of the clutch master cylinder 62 toward the reservoir tank 64 in connection with the operation of the clutch pedal 60 is reduced, as compared with the case where the clutch device does not include the one way restrictor 130. When the clutch pedal 60 is subsequently depressed, the amount of ineffective pedal travel that does not contribute to generation of a hydraulic pressure in the pressure chamber 86 of the clutch master cylinder 62 can be reduced, thus assuring improved operability of the clutch pedal 60, as in the above-described examples.

While some embodiments of the invention have been described in detail with reference to the drawings, the invention is not limited to these embodiments, but may be otherwise embodied.

In the examples as described above, each of the one way restrictor 130, one way restrictor 150 and one way restrictor 160, which serves as a flow control device, is provided in the chamber housing 90. However, the one way restrictor may be provided at some point in the attachment tube 100 or connecting hose 98, for example. Also, each of the one way restrictor 170, one way restrictor 190, one way restrictor 200, one way restrictor 210, restriction control valve 250 and the restriction control valve 260, which serves as a flow control device, is provided at some point in the connecting hose 98. However, the one way restrictor or restriction control valve may be provided in the chamber housing 90 or the attachment tube 100, for example. Also, each of the restriction member 220, restriction member 230 and the restriction member 240, which serves a flow control device, is fitted in the opening of the attachment tube 100. However, - the restriction member may be provided in the chamber housing 90 or at some point in the connecting hose 98, for example. In sum, the flow control device may be provided at some point in the oil path that communicates the pressure chamber 86 of the clutch master cylinder 62 with the reservoir tank 64.

While the restriction hole 138 has a generally circular cross-sectional shape in the illustrated examples, the restriction hole of the invention is not limited to this shape, but may be in various forms, for example, in the form of a slit. In sum, the cross-sectional shape of the restriction hole is not particularly limited provided that it gives flow resistance to the hydraulic oil flowing in the ail path between the pressure chamber 86 of the clutch master cylinder 62 and the reservoir tank 64.

While the one way restrictor 130, one way restrictor 150, one way restrictor 160, one way restrictor 170, one way restrictor 190 and the one way restrictor 200 are provided with the spring 136, spring 152 or spring 180 for biasing the valve element in the illustrated examples, the one way restrictor may be configured in various forms. For example, the one way restrictor may not be provided with the spring 136, spring 152 or spring 180.

While the clutch slave cylinder 66 includes the output piston 116, second piston 118 and the seal member 120, which are arranged in this order as viewed from the diaphragm spring 50, the clutch slave cylinder 66 is not limited to this arrangement, but may be configured in various other forms. For example, the clutch slave cylinder 66 may not include the second piston 118, and the seal member 120 may also serve as the second piston 118. As another example, the second piston 118 and the seal member 120 may be formed as an integral component, or the output piston 116, second piston 118 and the seal member 120 may be formed as an integral component.

In the illustrated examples, the clutch slave cylinder 66 is configured such that a minute clearance is formed between the output piston 116 and the second piston 118 so as to prevent vibrations generated in the engine, etc. and transmitted to the output piston 116 from being transmitted to the seal member 120. However, the clutch slave cylinder 66 may be otherwise configured provided that the above-mentioned minute clearance is formed between the diaphragm spring 50 and the seal member 120. For example, the clutch slave cylinder 66 may be configured such that the minute clearance is formed between the second piston 118 and the seal member 120.

In the clutch master cylinder 62 of the illustrated examples, the cylinder housing 76 and the reservoir tank 64 may be formed integrally with each other.

It is to be understood that the above-described embodiments and their modified examples are presented for illustrative purposes only, and that the invention may be otherwise embodied with various changes, modifications and/or improvements, without departing from the principle of the invention.

## Claims

1. A vehicular clutch device **characterized by** comprising:
a reservoir tank (64) in which a hydraulic oil is stored;
a clutch master cylinder (62) that is connected to the reservoir tank (64), and has a pressure chamber (86) from which a hydraulic pressure is delivered in response to an operation of a clutch pedal (60);
a clutch cylinder (66) that receives the hydraulic pressure delivered from the clutch master cylinder (62) and disengages a friction clutch (12); and
a flow control device ( 220) that restricts flow of the hydraulic oil from the pressure chamber (86) of the clutch master cylinder (62) to the reservoir tank (64) when the flow takes place in accordance with the operation of the clutch pedal (60); wherein
the flow control device (220) includes a restriction hole (222) that gives flow resistance to the hydraulic oil that flows in an oil path that communicates with the pressure chamber (86) of the clutch master cylinder (62) and the reservoir tank (64); and wherein:
the clutch master cylinder (62) includes an attachment tube (100) that connects the clutch master cylinder (62) with the reservoir tank (64), the attachment tube (100) having an opening formed at a distal end thereof; **characterised in that**
the flow control device (220) is fitted and mounted in the opening of the attachment tube (100); and **in that**
the restriction hole (222) provided in the flow control device (220) is formed such that a cross-sectional area of the oil path formed in the restriction hole increases from the clutch master cylinder (62) side to the reservoir tank (64) side; wherein
a connecting hose (98) connects the attachment tube (100) to the reservoir tank (53); and wherein
the flow control device (220) has a flange (224) having an outside diameter that is larger than a diameter of the opening in the distal end of the attachment tube (108) and is equal to or smaller than an outside diameter of an end face of the attachment tube.

2. The vehicular clutch device according to claim 1, wherein
the clutch cylinder (66) includes a cylinder housing (108) in which a clutch output shaft (18) is inserted, an annular pressure chamber (114) that is formed radially outward from the clutch output shaft (18) in the cylinder housing (108) and that receives the hydraulic pressure delivered from the clutch master cylinder (62), an annular first piston (116) that is slidably fitted in the cylinder housing (108) and transmits clutch operating force to the friction clutch (12), and at least one of an annular second piston (118) and an annular seal member (120) that is disposed adjacent to the first piston (116) so as to be movable away from the first piston (116) in the cylinder housing (108) and that is adapted to receive the hydraulic pressure in the pressure chamber (114) and transmit thrust force to the first piston (116).

## Patentansprüche

1. Fahrzeugkupplungsvorrichtung, **dadurch gekennzeichnet, dass** sie Folgendes umfasst:
einen Behältertank (64), in dem ein Hydrauliköl gespeichert ist;
einen Kupplungshauptzylinder (62), der mit dem Behältertank (64) verbunden ist und eine Druckkammer (86) umfasst, aus der als Antwort auf ein Niederdrücken eines Kupplungspedals (60) ein Hydraulikdruck geliefert wird;
einen Kupplungszylinder (66), der den vom Kupplungshauptzylinder (62) gelieferten Hydraulikdruck aufnimmt und eine Reibkupplung (12) auskuppelt; und
eine Flusssteuervorrichtung (220), die den Fluss des Hydrauliköls aus der Druckkammer (86) des Kupplungshauptzylinders (62) in den Behältertank (64) einschränkt, wenn der Fluss entsprechend der Betätigung des Kupplungspedals (60) auftritt; wobei
die Flusssteuervorrichtung (220) ein Drosselloch (222) umfasst, das einen Flusswiderstand auf das Hydrauliköl ausübt, das in einer Ölleitung fließt, die mit der Druckkammer (86) des Kupplungshauptzylinders (62) und dem Behältertank (64) in Verbindung steht; und wobei:
der Kupplungshauptzylinder (62) ein Anbringungsrohr (100) umfasst, das den Kupplungshauptzylinder (62) mit dem Behältertank (64) verbindet, wobei das Anbringungsrohr (100) eine Öffnung aufweist, die an einem distalen Ende desselben ausgebildet ist;
**dadurch gekennzeichnet, dass**
die Flusssteuervorrichtung (220) in der Öffnung des Anbringungsrohrs (100) befestigt und montiert ist; und dadurch, dass
das in der Flusssteuervorrichtung (220) vorgesehene Drosselloch (222) so gebildet ist, dass sich eine Querschnittsfläche der Ölleitung, die in dem Drosselloch gebildet ist, von der Seite des Kupplungshauptzylinders (62) hin zur Seite des Behältertanks (64) vergrößert; wobei
ein Verbindungsschlauch (98) das Anbringungsrohr (100) mit dem Behältertank (53) verbindet; und wobei
die Flusssteuervorrichtung (220) einen Flansch (224) aufweist, der einen Außendurchmesser aufweist, der größer als ein Durchmesser der Öffnung im distalen Ende des Anbringungsrohrs (108) ist und kleiner-gleich einem Außendurchmesser einer Endfläche des Anbringungsrohrs ist.

2. Fahrzeugkupplungsvorrichtung nach Anspruch 1, wobei
der Kupplungszylinder (66) ein Zylindergehäuse (108) umfasst, in dem ein Kupplungsabgabeschaft (18) eingeführt ist, eine ringförmige Druckkammer (114), die radial außerhalb des Kupplungsabgabeschafts (18) im Zylindergehäuse (108) gebildet ist und die einen vom Kupplungshauptzylinder (62) abgegebenen Hydraulikdruck aufnimmt, einen ringförmigen ersten Kolben (116), der gleitfähig in dem Zylindergehäuse (108) montiert ist und die Kupplungsbetätigungskraft an die Reibkupplung (12) überträgt, und mindestens entweder einen ringförmigen zweiten Kolben (118) oder ein ringförmiges Dichtteil (120), der oder das benachbart zum ersten Kolben (116) so angeordnet ist, dass er oder es vom ersten Kolben (116) im Zylindergehäuse (108) weg bewegbar ist und dazu angepasst ist, den Hydraulikdruck in der Druckkammer (114) aufzunehmen und Schubkraft auf den ersten Kolben (116) zu übertragen.

## Revendications

1. Dispositif d'embrayage de véhicule, **caractérisé en ce qu'**il comprend :
un réservoir (64) dans lequel est stockée une huile hydraulique ;
un maître-cylindre d'embrayage (62) connecté au réservoir (64), et présentant une chambre de pression (86) depuis laquelle une pression hydraulique est délivrée en réponse à un actionnement d'une pédale d'embrayage (60) ;
un cylindre d'embrayage (66) recevant la pression hydraulique délivrée par le maître-cylindre d'embrayage (62) et désengageant un embrayage à friction (12) ; et
un dispositif de régulation de l'écoulement (220) qui limite l'écoulement de l'huile hydraulique depuis la chambre de pression (86) du maître-cylindre d'embrayage (62) vers le réservoir (64) lorsque l'écoulement a lieu conformément à l'actionnement de la pédale d'embrayage (60) ;
le dispositif de régulation de l'écoulement (220) comportant un trou de restriction (222) qui fournit une résistance à l'écoulement de l'huile hydraulique qui s'écoule dans un chemin d'huile qui communique avec la chambre de pression (86) du maître-cylindre d'embrayage (62) et avec le réservoir (64) ; et
le maître-cylindre d'embrayage (62) comportant un tube de fixation (100) qui relie le maître-cylindre d'embrayage (62) au réservoir (64), le tube de fixation (100) ayant une ouverture formée au niveau d'une extrémité distale de celui-ci ;
**caractérisé en ce que**
le dispositif de régulation de l'écoulement (220) est ajusté et monté dans l'ouverture du tube de fixation (100) ; et **en ce que**
le trou de restriction (222) prévu dans le dispositif de régulation de l'écoulement (220) est formé de telle sorte qu'une surface en section transversale du chemin d'huile formé dans le trou de restriction augmente depuis le côté du maître-cylindre d'embrayage (62) jusqu'au côté du réservoir (64) ;
un tuyau de connexion (98) reliant le tube de fixation (100) au réservoir (64) ; et
le dispositif de régulation de l'écoulement (220) présentant une bride (224) ayant un diamètre extérieur qui est plus grand qu'un diamètre de l'ouverture dans l'extrémité distale du tube de fixation (100) et qui est inférieur ou égal à un diamètre extérieur d'une face d'extrémité du tube de fixation.

2. Dispositif d'embrayage de véhicule selon la revendication 1, dans lequel
le cylindre d'embrayage (66) comporte un boîtier de cylindre (108) dans lequel est inséré un arbre de sortie d'embrayage (18), une chambre de pression annulaire (114) qui est formée radialement à l'extérieur de l'arbre de sortie d'embrayage (18) dans le boîtier de cylindre (108) et qui reçoit la pression hydraulique délivrée par le maître-cylindre d'embrayage (62), un premier piston annulaire (116) qui est ajusté de manière coulissante dans le boîtier de cylindre (108) et qui transmet la force d'actionnement de l'embrayage à l'embrayage à friction (12), et au moins l'un d'un deuxième piston annulaire (118) et d'un organe d'étanchéité annulaire (120) qui est disposé à côté du premier piston (116) de manière à pouvoir être déplacé à l'écart du premier piston (116) dans le boîtier de cylindre (108) et qui est prévu pour recevoir la pression hydraulique dans la chambre de pression (114) et pour transmettre la force de poussée au premier piston (116).
